# EUROPEAN PATENT SPECIFICATION

(11) **EP 1 784 435 B1**
(45) Date of publication and mention of the grant of the patent: **11.11.2009**
(21) Application number: 05779023.0
(22) Date of filing: 02.09.2005
(51) Int. Cl.: C08F 220/00

(54) **METHODS FOR PRODUCING CROSSLINKABLE OLIGOMERS**
VERFAHREN ZUR HERSTELLUNG VERNETZBARER OLIGOMERE
MÉTHODES PERMETTANT DE PRODUIRE DES OLIGOMÈRES RÉTICULABLES

(30) Priority: 03.09.2004 US 934280
(43) Date of publication of application: 16.05.2007
(73) Proprietor: Nuplex Resins B.V., 4612 RB Bergen op Zoom (NL)
(72) Inventor: BZOWEJ, Eugene Ivan, LOUISVILLE, Kentucky 40220 (US); BRINKHUIS, Richard Hendrikus Gerrit, NL-8011 JX ZWOLLE (NL); SHALATI, Mohamad Deeb, LOUISVILLE, KY 40241 (US); ELFRINK, Petrus Johannes Maria David, NL-5813 PZ BOXMEER (NL); HALDANKAR, Gautam S., LOUISVILLE, KY 40241 (US)
(74) Representative: Derks, Wilbert
(86) International application number: PCT/EP2005/054344
(87) International publication number: WO 2006/024669

(56) References cited:
- EP-A- 1 010 706
- US-A- 5 098 956
- US-A- 5 571 884
- US-A- 5 710 227
- US-A1- 2004 122 195
- US-A1- 2004 138 385

## Description

### FIELD OF THE INVENTION

This invention relates to a method of producing novel crosslinkable oligomers, the novel crosslinkable oligomers and curable coatings, sealants, and adhesives utilizing such crosslinkable oligomers. Block, branched, star and comb-like graft crosslinkable copolymers derived from such crosslinkable oligomers are also disclosed.

### BACKGROUND OF THE INVENTION

Increasingly strict worldwide VOC regulations in the coatings and other industries and the associated reduction of the solvent content that is required to meet these VOC regulations have necessitated improvements in resin performance. Reduction of the solvent content in coatings requires improvements in solids - viscosity profiles. Typically, for low VOC systems, molecular weight and degree of polymerization is decreased in order to lower resin viscosity and solvent demand. However, the lower the molecular weight of the oligomer, the more difficult it is to incorporate sufficient crosslinking functionality by standard polymerization techniques. In fact, very low molecular weight oligomers may contain a fraction without any functionality whatsoever. The result can be poor coating performance due to insufficient crosslink density and relatively high levels of mobiles and extractable species. This loss of functionality can be offset somewhat by utilizing very high levels of functional monomers, but this solution can cause its own set of problems, such as lack of compatibility and a very high isocyanate demand. As isocyanate is one of the most expensive coating components, the latter can result in increased cost for the coating manufacturer. Additionally, conventional polymerization techniques do not offer narrow functionality distribution or narrow molecular weight distribution.

Other technology utilized to lower VOC's include the use of low molecular weight, non-oligomeric "polyols" such as 1,6-hexanediol, cyclohexane dimethanol, and trimethylolpropane. However, these suffer from very high isocyanate demand, extremely slow dry times and very high crosslink density. Also suffering from the same disadvantages, as well as being very moisture sensitive, are amine containing diluents that are blocked to attenuate reactivity, such as aldimines, ketimines and oxazolidines.

Several other techniques are also utilized to provide control in molecular structure and polymerization reactions. These include group transfer polymerization (GTP), atom transfer polymerization (ATRP), nitroxide mediated polymerization, and reversible addition-fragmentation transfer (RAFT) polymerization. Although these techniques offer impressive control in polymerization reactions, these techniques also require use of preformed reagents that are difficult to remove and are not cost effective.

Additionally, various procedures are known which attempt to ensure that crosslinkable copolymers formed with conventional radical polymerization processes contain at least one crosslinkable moiety. Usually, this is accomplished by making sure that at least one end group is associated with such a crosslinkable moiety. For example, one can utilize crosslinkable functional groups attached to initiator fragments. However, this approach can be cost prohibitive due to the combination of the high cost of the specialty initiators, and the high level of such specialty initiators that are required to achieve the targeted low molecular weight.

Crosslinkable functional groups attached to conventional chain transfer agents (e.g. mercaptoethanol) have also been used. But in addition to their higher costs, the functional mercaptans also increase the toxicity and odor of the oligomers, as well as decreasing the durability of the coatings obtained.

Functional comonomers having high chain transfer reactivity can be used, such as allylic alcohol derivatives. Guo et al, describe the "guaranteed" functionality of polyols obtained this way in "High-Solids Urethane Coatings With Improved Properites From Blends of Hard and Soft Acrylic Polyols Based on Allylic Alcohols" at pages 211-223 of the Proceedings of the Twenty-Ninth International Waterborne, High-Solids & Powder Coatings Symposium, February 6-8,. More particularly, this paper discusses the control of functionality in the polymer process that limits the levels of mono- and non-functional polymer chains. The polymer process also gives rise to more alternating hydroxy functional structures. Allyl alcohol monomers are used which also act as functional chain transfer agents. U.S. Patent No. 5,571,884 and U.S. Patent No. 5,475,073 relate to the use of allyl based hydroxyl functional monomers and low molecular weight resins, but do not specifically describe the concept of such "guaranteed" functionality. This type of approach, however, is accompanied by the need to use special kind of functional comonomers. These comonomers are less favorable from a durability point of view, compared to more broadly used methacrylates or styrenics.

Radical copolymerization of more conventional functional monomers is broadly used for making crosslinkable polymers. The use of relatively high temperature conditions for such processes is also known. However, these techniques do not clarify how the minimum functionality of functional oligomers can be increased without using any building blocks other than the comonomers and standard initiators.

U.S. Patent No. 5,710,227 relates to the formation of a oligomer from monomers of acrylic acid and its salts and specific combinations of water, ketones, alcohols or other non-ester solvents. These oligomers have degrees of polymerization less than 50, but no process for controlling the minimum level of functionality or purity are described.

U.S. Patent No. 6,376,626 describes the synthesis of high purity macromonomers from acrylic, styrenic, and methacrylic monomers under high temperature conditions. High purity macromonomers are obtained only when the amount of acrylic and styrenic monomers in the reaction mixture is equal or greater than half of the amount of total monomers in the reaction mixture. In Polymer Preprints, 2002, volume 43, issue 2, at page 160, Yamada also describes a copolymerization with methacrylic and acrylic monomers requiring an excess of acrylic monomers. Further, no mention of controlling the distribution of crosslinkable functionality in the macromonomer is disclosed in either document.

In WO 99/07755 and EP 1010706, a high temperature process to make macromonomers is described utilizing very high levels of styrenic and acrylic monomers, and does not describe a process for achieving enriched minimum functionality of crosslinkable side groups in the product.

U.S. Patent No. 6,100, 350 relates to the synthesis of addition polymers containing multiple branches having a polymerizable olefin group. However, a high amount of acrylate monomers is required in the reaction mixture and the use of a preformed macromonomeric chain transfer agent is required for efficient polymerization.

U.S. Patent Publication No. 2002/0193530 relates to a copolymer having pendant functionalities capable of reacting with a dicarboxylic acid.

U.S. Patent Publication No. 2004/0122195 relates to a process for producing a copolymer involving a combined macromonomer synthesis followed by a low temperature copolymerization with acrylates, wherein the mass of acrylate comonomer used is 50% or less of the total mixture of macromonomer and comonomer. Furthermore, no attention is paid to controlling the distribution of the crosslinkable functionality in the oligomers.

Publication WO2004/007627 describes a process for the manufacture of crosslinkable oligomers comprising reacting a monomer mixture of nonfunctional acrylate and functional methacrylate monomers. Coatings comprising these crosslinkable oligomers have insufficient coating hardness and coating curing times and have too high volatile organic contents (VOC).

US2005/004321 describes a process for the manufacture of crosslinkable oligomers comprising reacting a monomer mixture of functional acrylate and nonfunctional methacrylate monomers. The resulting crosslinkable oligomers have relatively high molecular weight to guarantee crosslinkable functionality and relatively low macromonomer purity. Coatings comprising these relatively high molecular weight crosslinkable oligomers still have undesirable high volatile organic contents (VOC).

US patent US 5098956 describes a polyol blend comprising a low and a high Tg acrylic copolymer both comprising hydroxy alkyl acrylate or methacrylate and a non-hydroxy containing alkyl methacrylate. The oligomers need to have undesirably high molecular weight to guarantee sufficient crosslinkable functionality. Coatings comprising these crosslinkable oligomers still have undesirable high volatile organic contents (VOC).

Thus, it is one objective of the present invention to provide a cost efficient method to produce crosslinkable oligomers with control over functionality distribution and molecular weight control. It is a further object of the present invention to produce improved crosslinkable oligomers, which may be formed from comonomers commonly used in practice, such as methacrylates, acrylates and styrene.

### SUMMARY OF THE INVENTION

It has been found that when conducting a high temperature polymerization process on a reaction mixture comprising a specific ratio of certain monomers, as described further herein, crosslinkable oligomers are obtained possessing a high level of crosslinkable side groups associated with chain ends, and therefore with a relatively very low fraction of non-functional material

More specifically, the invention relates to a process for the preparation of crosslinkable oligomers according to claim 1, 2, 4 or 35.

The oligomers formed as a result of this novel process give rise to very low levels of extractable, non-crosslinkable functional material as demonstrated by mass spectrometric analysis of low molecular weight fractions. These oligomers are particularly useful for use in crosslinking formulations for adhesives, coatings and sealants.

Additionally, the oligomers formed as a result of this novel process are also particularly useful in the formation of block, branched, star, or comb-like graft crosslinkable copolymers, by using them in a second polymerization step using their unsaturated functionality as described herein.

Further objects, advantages and novel features will be apparent to those skilled in the art upon examination of the description that follows.

### DETAILED DESCRIPTION OF THE INVENTION

In the prior art, it has been suggested that under radical polymerization conditions involving only acrylates or styrene, intramolecular proton abstraction followed by fragmentation due to β-scission can lead to chains with an unsaturated end group (as shown in Scheme 1, Y = H, further referred to as macromonomers). High macromonomer purity is observed for copolymers only when very high levels of these monomers are used.

In the present invention, the at least one monomer of type I and the at least one monomer of type II are reacted at high temperature. In the reaction of the present invention, but without wishing to be bound by theory, the hydrogen abstraction suggested by the prior art that may take place from the backbone is feasible only from methine groups originating from incorporated type (I) monomers. Therefore, the unsaturated end group will be associated with a side group of a type (I) monomer (as shown by X in Scheme 1, Y #H, W and V groups not drawn for clarity).

In light of the prior art, it was surprisingly found that when more than 60 mole % of the type (I) monomers have crosslinkable functionality, in combination with type (II) monomers where the total amount of type (II) monomers is between 50 mole % and 95 mole % of the total of type (I) and type (II) monomers, the resulting oligomers were found to be highly enriched with a terminal carbon-carbon double bond and enriched with a terminal, crosslinkable functional group (X).

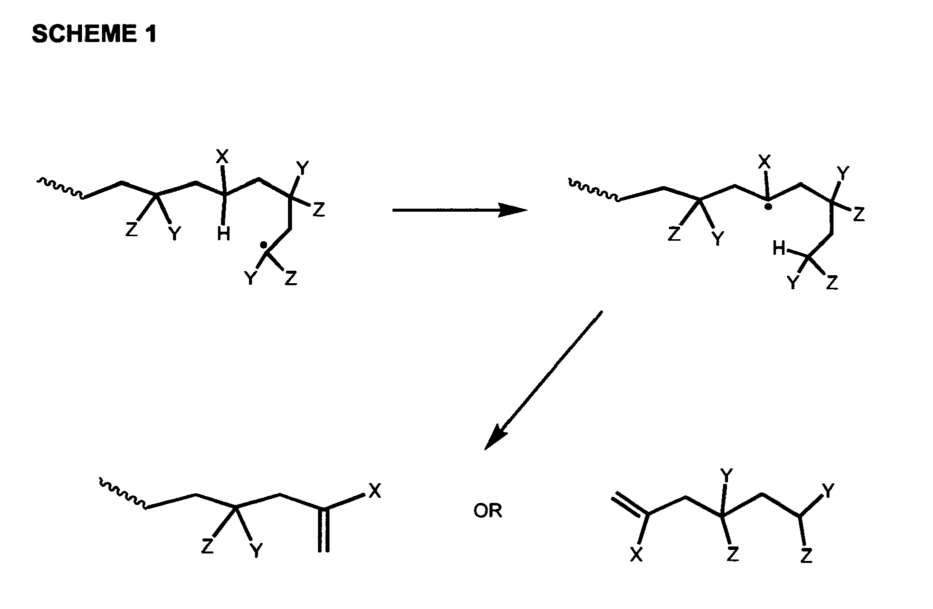

In order to insure sufficient incorporation of functional monomers and thus, low amounts of non-functional, extractable oligomer fractions, at least 60 mole % of the total amount-of type (I) monomer or monomers selected for inclusion in the reaction mixture will have a side group containing at least one crosslinkable functional moiety. Preferably, at least 80 mole % of the total amount of type (I) monomer or monomers selected for inclusion will have such a side group, more preferably at least 90 mole %, and most preferably substantially all of the type (I) monomer or monomers selected will have the side group.

To ensure a high percentage of incorporation of at least one crosslinkable functional group (X) per oligomer chain in combination with crosslinkable or non-crosslinkable type (II) functional groups (Z), both utilization of type (I) monomer or monomers which all contain at least one crosslinkable side group and very high macromonomeric purity is needed. Macromonomeric purity (also referred to as macromer purity) is the mole percentage of oligomers having an unsaturated end group, defined by the number of an unsaturated bonds as determined by NMR measurements divided by the number average molecular weight of the oligomers determined by GPC. Preferably, in the process according to the invention, the macromer purity is at least 70 mole %, more preferably at least 80%, even more preferably at least 90%, and most preferably at least 95%.

Oligomers highly enriched with end groups containing crosslinkable side groups are formed, even when, overall, relatively low molar amounts of the type (I) monomers, in relation to the amount of type (II) monomers, are added to the reaction mixture and, therefore, not statistically expected from a simple random polymerization.

It will be apparent to one skilled in the art that the relative reactivity of the functional groups in post polymerization reactions, including crosslinking coating formulations, can be a powerful tool for manipulation of the crosslinking chemistry. This chemistry can be controlled by using mixtures of type (I) monomers with different crosslinkable side groups in the formation of the crosslinkable oligomer, which produces mixtures of crosslinkable oligomers with different crosslinkable end groups. For example, the pot-life for two component crosslinking compositions may be manipulated in this way. Furthermore, it will be apparent to one skilled in the art that the relative reactivity of the functional groups to each other will be of considerable consequence and can allow one to manipulate the degree of crosslinking during the polymerization reaction and/or the post polymerization. It is also within the scope of the invention to utilize type (I) monomers that contain more than one type of crosslinkable functional group per molecule and that exhibit varying degrees of reactivity with the appropriate choice of crosslinkers.

Those skilled in the art will recognize that there are many type (I) monomers having a crosslinkable functional moiety which would be useful in the present invention, such as those type (I) monomers wherein R is substituted with one or more of the following: hydroxy, epoxy, alkoxy, acyl, acyloxy, silyl, silyloxy, silane, carboxylic acid (and salts), 1,3-dicarbonyl, isocyanato, sulfonic acid (and salts), anhydride, alkoxycarbonyl, aryloxycarbonyl, iminoether, imidoether, amidoether, lactone, lactam, amide, acetal, ketal, ketone, oxazolidinone, carbamate (acyclic and cyclic), carbonate (acyclic and cyclic), halo, dialkylamino, oxaziridine, aziridine, oxazolidine, orthoester, urea (acyclic or cyclic), oxetane or cyano. Preferably, the crosslinkable functional moiety contained in the side group is selected from the group consisting of hydroxyl, silyl, anhydride, epoxy, amine, ether, carboxylic acid, sulfonic acid, carbamate, carbonate, ketone, acetal, lactam, amide, urea, and 1,3-dicarbonyl. However, it is also within the scope of this invention to utilize a mixture of type (I) monomers with different crosslinkable functionality.

Suitable examples of monomers with hydroxyl side groups include hydroxyethyl acrylate, hydroxypropylacryate, hydroxypentyl acrylate (all isomers), hydroxyhexyl acrylate (all isomers), hydroxybutyl acrylate (all isomers), isomers of hydroxypropyl acrylate, 4-hydroxystyrene, 1,4-cyclohexanedimethanol monoacrylate, hydroethyl acrylate capped with ε-caprolactone (TONE monomers), adducts of acrylic acid with mono-epoxides such as Cardura E-10 (a glycidyl ester of neodecanoic acid available commercially from Resolution Performance Products), 1,2-epoxycyclohexane, glycidol; adducts of carbonate acrylates and amines, hydroxyethyl acrylate capped with polyethylene oxide, hydroxypropylacryate capped with polyethylene oxide, hydroxyhexyl acrylate capped with polyethylene oxide, isomers of hydroxybutyl acrylate capped with polyethylene oxide, hydroxyethyl acrylate extended with polypropylene oxide, hydroxypropylacryate extended with polypropylene oxide, hydroxyhexyl acrylate extendedcapped with polypropylene oxide, isomers of hydroxybutyl acrylate extendedwith polypropylene oxide and mixtures thereof.

Suitable examples of monomers with silyl side groups include vinyloxytrimethylsilane, trimethoxysilylpropyl acrylate, triethoxysilylpropyl acrylate, dimethoxysilylpropyl acrylate, diethoxysilylpropyl acrylate, dibutoxysilylpropyl acrylate, diisopropoxysilylpropyl acrylate.

Anhydride-functional monomers which are useful in the practice of this invention can be any aliphatic or aromatic compound having a cyclic or acylic dicarboxylic acid anhydride group and a free-radically polymerizable vinyl group in the molecule. Especially preferred in the practice of this invention is the use of anhydride-functional monomers such as acrylic acid anhydride, alkenyl succinic anhydride monomers, maleic anhydride, vinyl hexahydropthalic anhydride isomers, 3-methyl-1,2,6-tetrahydrophthalic anhydride, 2-methyl-1,3,6-tetrahydrophthalic anhydride, 2-(3/4 vinyl benzyl) succinic acid, (2-succinic anhydride) acrylate, bicyclo [2.2.1] hept-5-ene-2-spiro-3'-exo-succinic anhydride. Alkenyl succinic anhydrides, including propenyl succinic anhydride and higher alkenyl anhydride, such as dodecenylsuccinic anhydride, octenylsuccinic anhydride, are routinely prepared by the reaction of maleic anhydride and olefins.

Useful epoxy-functional monomers can be any aliphatic or aromatic compound having the 1,2-epoxy group and containing an ethylenically unsaturated group in the molecule that is crosslinkable towards free-radical polymerization. Examples of epoxy monomers include glycidyl acrylate, 4-hydroxybutyl acrylate glycidyl ether (4-HBAGE), vinylcyclohexene oxide, allyl glycidyl ether, N-glycidyl acrylamide, acrylate monomers with alicyclic epoxy group.

Amine functional monomers which may be utilized as type (I) monomer or monomers have amine functional side groups that can be any aliphatic or aromatic compounds having tertiary amine groups or a hindered secondary amine group and containing an ethylenically unsaturated group. Examples of amine functional monomers are selected from the group consisting of dimethylaminoethyl acrylate, diethylaminoethyl acrylate, dimethylaminoethyl acrylamide, n-t-butylaminoethyl acrylate, monomers resulting from the reaction of or t-butyl amine or dialkyl amines with glycidyl acrylate, and mixtures thereof.

Ethers monomers suitable for the practice of the present invention include acrylate, vinyl or styrenic monomers having ether or aminoplast crosslinking side groups in the molecule such as vinyl alkyl ethers and alkyloxymethyl groups. Examples of these monomers include N-alkoxymethyl derivative of acrylamide such as methylated N-methylol acrylamide and butylated N-methylol acrylamide, vinyl and acrylate monomers that contain the alkoxymethyl derivatives of ureas, amides, imides, melamines and benzoguanamines groups. Other examples include the vinyl N-alkoxymethyl derivative of succinimide, phthalimide, N-alkoxymethyl 1,2,3,6-tetrahydrophthalimide anhydride and N-alkoxymethylmaleimide.

Other monomers with crosslinkable functionality known to those skilled in the art are also suitable in the practice of this invention, such as carboxylic acid, sulfonic acid, carbamate, carbonate, ketone, acetal, lactam, amide, urea, and 1,3-dicarbonyl functional monomers. Examples of such suitable functional monomers include acrylic acid, β-carboxyethyl acrylate, 3-vinylbenzoic acid, 4-vinyl benzoic acid, vinyl acetate, vinyl benzoate, vinyl 4-tert-butyl benzoate, VEOVA (a vinyl ester of versatic acid, available commercially from Resolution Performance Products), acryloyloxyethylsuccinate, maleic acid, fumaric acid, and half-acid/esters of maleic anhydride, diacetone acrylamide, acryloyoloxy ethyl acetoacetate, 2-vinyl-1,3-dioxolane, vinyl ethylene carbonate, N-vinylcaprolactam, acrylamide, N-hydroxymethylacrylamide, 2-N-ethyleneurea-ethyloxyacrylate, and 2-N-ethyleneurea-ethyl-acrylamide.

Between 0 and 40% of type (I) monomers utilized in the present invention may not contain a crosslinkable functional moiety. Examples of such non-functional type (I) monomers that may be useful in the present invention include methyl acrylate, ethyl acrylate, propyl acrylate, isomers of propyl acrylate, butyl acrylate, isomers of butyl acrylate, hexyl acrylate, 2-ethylbutyl acrylate, 2-ethylhexyl acrylate, isobornyl acrylate, isoamyl acrylate, benzyl acrylate, phenyl acrylate, cyclohexyl acrylate, lauryl acrylate, isodecyl acrylate, styrene, and cetyl acrylate.

One or more type (II) monomers is or are combined with the type (I) monomer or monomers within a reaction vessel. The level of type (II) monomer in the overall monomer mixture is important for the macromonomeric purity of the resulting oligomer. The amount of type (II) monomer or monomers utilized in the present invention is between 55 mole % and 90 mole %, based on the total number of moles of both type (I) and type (II). Preferably, the amount of type (II) monomer or monomers is between 60 mole % and 80 mole %. Macromonomer purity increases when greater than 50 mole % of type (II) monomers are used and is at the highest level when the amount of type (II) monomers is a range between 60 mole % and 80 mole %.

Examples of type (II) monomers suitable for use in the present invention include, but are not limited to, methyl methacrylate, ethyl methacrylate, propyl methacrylate, isomers of propyl methacrylate, butyl methacrylate, isomers of butyl methacrylate, hexyl methacrylate, 2-ethylbutyl methcarylate, crotyl methacrylate, 2-ethylhexyl methacrylate, isobornyl methacrylate, isoamyl methacrylate, benzyl methacrylate, phenyl methacrylate, tetrahydrofurfuryl methacrylate, 3,3,5-trimethylcyclohexyl methacrylate, alphamethylstyrene, cyclohexyl methacrylate, stearyl methacrylate, lauryl methacrylate, isodecyl methacrylate. The scope of the invention is not limited to type (II) monomers without crosslinkable groups therefore, crosslinkable type (II) monomers suitable for use in the present invention include, but are not limited to, glycidyl methacrylate, 2-hydroxyethyl methacrylate, hydroxypropyl methacrylate, isomers of hydroxypropyl methacrylate, hydroxybutyl methacrylate, isomers of hydroxybutyl methacrylate, glycerolmonomethacrylate, methacrylic acid, itaconic anhydride, citraconic anhydride, dimethylaminoethyl methacrylate , diethylaminoethyl methacrylate, dimethylaminopropyl methacrylamide, 2-tert-butyl aminoethyl methacrylate, triethyleneglycol methacrylate, methacrylamide, N,N-dimethyl methacrylamide, N-tert-butyl methacrylamide, N-methylol methacrylamide, N-ethylol methacrylamide, alphamethylvinyl benzoic acid (all isomers), diethylamino alphamethylstyrene, 2-isocyanatoethyl methacrylate, isomers of diethylamino alphamethylstyrene, trimethoxysilylpropyl methacrylate, triethoxysilylpropyl methacrylate, methacrylic acid, tributoxysilylpropyl methacrylate, dimethoxymethylsilylpropyl methacrylate, diisopropoxymethylsilylpropyl methacrylate, dimethoxysilylpropyl methacrylate, diethoxysilylpropyl methacrylate, dibutoxysilylpropyl methacrylate, diisopropoxysilylpropyl methacrylate, isobutylene, and mixtures thereof.

Preferably, in the process according to the invention the Z and X are carboxylic acid, carboxylic acid ester or substituted or unsubstituted aryl groups. This corresponds to in particular to acrylate, methacrylate and styrenic type monomers. Even with those readily available and inexpensive monomer is very good results were obtained.

Optionally, the type (I) and type (II) monomers are reacted in the presence of at least one free radical initiator, which may be added to the reactor vessel as part of the mixture of type (I) and type (II) monomers or as a separate feed. When added as a separate feed, the initiator may be added at the same rate as the mixture of type (I) and (II) monomers to synchronize the completion of the feeds, or may be added slower or faster than the rate of addition of the monomer mixture. Any conventional free radical initiator, chosen by one skilled in the art to have the appropriate half-life at the temperature of polymerization, may be utilized in the present invention. For example, suitable initiators include ether or acyl hydroperoxides, di-ether or di-acyl peroxides, peroxydicarbonates , mixed ether acyl peroxides, mixed ether peroxy carbonates, and mixed acyl peroxy carbonates in which substitution on the peroxide is by any alkyl and/or aryl group. Azo initiators can also be disubstituted with either alkyl or aryl groups. Examples of suitable alkyl groups include, but are not limited to, methyl, ethyl, butyl, isobutyl, tert-butyl, tert-amyl, diisopropylbenzyl, cetyl, 2,2,4-trimethylpentyl, isopropyl, 2-ethylhexyl, neodecyl, valeryl. Examples of suitable aryl groups include, but are not limited to, benzyl, phenyl, 1,1-diphenylmethyl, 1-phenylethyl, phthalyl, cumyl, and all isomers of diisopropylbenzyl. Preferred initiators include peroxides or azo-based initiators, such as tert-amyl hydroperoxide, tert-butyl hydroperoxide, cumyl hydroperoxide, 2,4,4-trimethylpentyl-2-hydroperoxide, di-tert-butyl peroxide, tert-butyl cumyl peroxide, dicumyl peroxide, 2,2'-azobis(isobutyronitrile) and 2,2'-azobis(2-methylbutyronitrile).

Those skilled in the art will recognize that when an initiator is utilized in a reaction it is important to choose an amount that is suitable for the particular reaction conditions and monomer content to ensure a balance between monomer conversion and, as disclosed in the present invention, macromonomer purity. In the present invention, the initiator is added in an amount between 0.1 mole% and 5 mole%, based on the number of moles of type (I) and (II) monomers being reacted. Preferably, between 0.1 mole % and 2 mole % is added, and more preferably, between 0.1 mole % and 1 mole % of initiator is added. At initiator levels greater than 5 mole %, the purity of the macromonomer decreases significantly and, therefore, the control of crosslinkable functionality in the oligomer correspondingly decreases.

In view of obtaining a relatively low molecular weight oligomer, the amount of initiator preferably is at least 0.4, more preferably at least 0.5 even more preferably at least 0.6 and most preferably at least 0.75 mole %. Good results can even be obtained at 1% initiator. It was found that the disadvantage of higher initiator levels could be offset by choosing a higher amount of monomer type II. Crosslinkable oligomers could be produced having a molecular weight below 2500 and having a high cross-link functionality and high macro monomer purity, at initiator levels above 0.5 mole% and an amount of monomer type II of at least 60 mole % (relative to the total amount of monomer type I and II).

In one preferred embodiment of the present invention, a chase procedure is performed wherein an additional amount of at least one free radical initiator may optionally be added upon the substantial completion of the reaction process in order to further polymerize any residual type (I) and/or (II) monomers remaining in the reaction solution. Preferably, the chase procedure is conducted at temperatures below 170°C. Any free radical initiator which may be utilized during the initial reaction process may also be utilized in the chase procedure.

However, in view of obtaining a high macromonomer purity that is preferred that in the process according to the invention residual unreacted monomer is removed directly after the substantial completion of the reaction without such a chase step, that is without subsequent addition of at least one free radical initiator at a temperature below 170°C. Preferably, this is done in a devolatilisation step, for example by stripping or by distillation.

Within the reactor vessel, a pressure is sustained which is sufficient to maintain the monomers and initiator in a substantially liquid phase during the reaction. Further, a temperature between 170°C and 260°, preferably between 175°C and 240°C, more preferably between 185°C and 220°C, and even more preferably between 190°C and 210°C is maintained throughout the reaction. In view of obtaining a low molecular weight crosslinkable oligomer, the reaction temperature is preferably chosen relatively high, preferably more than 190°C, more preferably at least 192, even more preferably at least 195°C. It was found that the disadvantage of a lower macromonomer purity at these high temperatures could be compensated by choosing a relatively high amount of type II monomer in the reaction mixture. Those skilled in the art will recognize that, within these limitations, the exact pressure and temperature will vary with the monomers and optionally, the initiators being used and the amounts of such monomers and optional initiators being reacted.

A solvent or diluent may also optionally be added to the reactants, preferably prior to the addition of the type (I) and (II) monomers and the optional free radical initiator. However, the solvent/diluent, or a portion thereof, may also be added during the addition of the monomers and the optional initiator. Although the solvent or diluent may be added at any level, it is preferable in view of obtaining a high yield capacity to carry out the reaction at a solids content of greater than 50 weight %, more preferably at least 60, even more preferably at least 70 and most preferably at least 75 wt %. Solid contents of at least 80 wt % are possible. In view of obtaining a relatively low molecular weight of the oligomer it is preferred to use a more diluted reaction mixture comprising at least 20, preferably at least 25 more preferably at least 30 even more preferably at least 35 and most preferably at least 40 wt%.

Suitable solvents and diluents include those that react under the conditions of the polymerization independent of the radical reactions or are inert or substantially inert under the conditions of the polymerization but are reactive under post polymerization conditions including coating crosslinking reactions (e.g., the solvent/diluent may be a crosslinkable low molecular weight component which does not participate in the radical reactions, or a higher molecular weight preformed oligomer/resin). It will be apparent to those skilled in the art that under the latter instance, the diluent functions both as a solvent in the main polymerization reaction and as a reactant in the post polymerization reaction. Such solvents or diluents may also react with the crosslinkable side group functionality in type (I) and / or type (II) monomers *in situ,* either retaining or increasing the number of side groups available. It will also be apparent to those skilled in the art that it is possible to change the type of crosslinkable functional group *in situ* by an appropriate choice of functional monomer, diluent and reaction conditions. The solvent or diluent may contain one or more functional groups that are reactive as described above. If there is a plurality of functional groups in the solvent or diluent, the functional groups may be the same or may be a mixture of more than one type of functional group with varying degrees of reactivity towards the crosslinkable side groups and / or other components of the crosslinking formulation.

Examples of suitable solvents and diluents include, but are not limited to, esters, ketones (e.g. methyl amyl ketone, methylisobutyl ketone, diethylketone), carbonates (e.g. ethylene carbonate, propylene carbonate, glycerin carbonate), carbamates (methyl carbamate, hydroxyethyl carbamate and hydroxypropyl carbamate), aromatic and (cyclo)aliphatic hydrocarbons (e.g. perhydronaphtalene, tetrahydronaphtalene, xylenes, o-dichlorobenzene), alcohols, glycol ethers, glycol ether esters, oxazolidines, acetals, orthoesters and mixtures thereof. Preferably, the solvent is an ester solvent. Suitable examples of ester solvents include methyl acetate, ethyl acetate, n-buty acetate, n-butyl proprionate, isobutyl acetate, n-pentyl propionate, n-propyl acetate, isopropyl acetate, amyl acetate,isobutyl isobutyrate and ethyl 3-ethoxypropionate.

The diluent can also be a low molecular weight polymer. Such a diluent is typically not removed from the reaction mixture after completion of the reaction. The molecular weight of this low molecular weight polymer diluents is preferably less than 5000, preferably less than 4000, even more preferably less than 2000 gr/mole. Preferably, a polyol is used, preferably a polyester having an OH value of at least 50, preferably at least 75, more preferably at least 100 mg KOH/g. In a preferred embodiment, the diluent is an oligomeric polyester with an OH value of at least 100 mg KOH/g, and a number average molecular weight of less than 2000.

It has been found that the crosslinkable oligomers produced by the process of the present invention preferably have a number average degree of polymerization between 3 and 24. More preferably, the number average degree of polymerization is between 3 and 15 and most preferably, the number average degree of polymerization is between 3 and 10. The crosslinking functionality of the crosslinkable oligomer is expressed in the functional equivalent weight (FEW, defined as the average weight per functional group determined by the number of functional groups divided by weight of the oligomers). In the preferred embodiment of the crosslinkable oligomer, the crosslinkable moiety is a hydroxyl group. In this case the crosslinkable functionality is expressed in hydroxyl equivalent weight (HEW), which is the FEW for a polyol. Preferably the FEW and HEW is between 100 and 1200, preferably between 125 and 1000 and more preferably between 150 and 800. Preferably the crosslinkable oligomers have a Tg between -50 °C and 100°C, preferably between -35°C and 80°C and more preferably between -20°C and 60°C.

As the graph in Figure 1 indicates, the molecular weight decreases with increasing percentage of type II monomer in the monomer mixture. A molecular weight (Mw) below 2500 gr/mole can be achieved at a type II monomer level of at least 50 mole%. This shows that the disclosed process provides a very powerful tool for controlling molecular weight and molecular weight distribution within the range of type (II) monomer content being practiced.

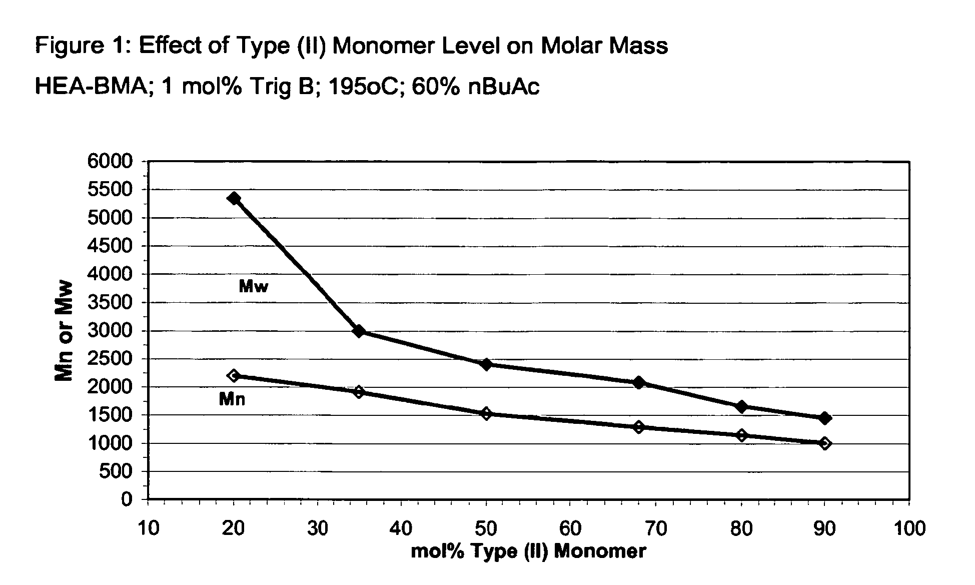

In the process according to the invention the monomer mixture comprises type (I) monomers of which between 60 mole % and 100 mole% contain a crosslinkable functional moiety and between 0 and 40 mole % do not contain a crosslinkable functional moiety and comprises between 50 mole % and 95 mole% (relative to the total number of moles of type (I) and type (II) monomer) of type (II) monomers which type II monomers optionally may contain a crosslinkable functional moiety.

In order to achieve sufficient crosslinking functionality, the monomer mixture preferably comprises at least 10 mole %, preferably 15, more preferably at least 20 mole % monomers having a crosslinkable functional moiety (relative to the total amount of monomers of type (I) and type (II)). The type (II) monomers may comprise more than 5 mole %, monomers having a crosslinkable functional moiety. Higher amounts of at least 10, 20, 30 or even 40 mole percent are also possible. The choice depends on the envisaged application. Although type II monomers can also comprise crosslinking functionality, it is preferred that the crosslinking functionality is concentrated on the type I monomers. Therefore, the monomer mixture comprises at least 10 mole % (relative to the total amount of monomers of type (I) and type (II)) of type (I) monomers having a crosslinkable functional moiety and in total at least 20 mole % of monomers having a crosslinkable functional moiety.

The novel, crosslinkable oligomers formed through the present invention have been found to be particularly useful for lubricants, adhesives, sealants and coatings due to the low levels of non-functional, extractable oligomer fractions provided by the process.

In the process according to the invention more than 80 mole %, most preferably substantially 100 mole % of the monomers of type (I) have a crosslinkable functional moiety. The most preferred crosslinkable oligomers for use in such lubricants, adhesives, sealants and coatings are the crosslinkable oligomers formed when 100 mole % of the type (I) monomer or monomers selected have a side group containing at least one crosslinkable functional moiety as described above.

In a preferred embodiment of the process the crosslinkable oligomer has a weight average molecular weight between 500 and 2500. Despite of the low molecular weight, the macro monomer purity of this low molecular weight crosslinkable oligomer still is at least 70 mole %, preferably at least 80 mole % and more preferably at least 90 mole %.

In view of achieving this low molecular weight it is preferred that the amount of type II monomer (relative to the total amount of type (I) and type (II) monomers) is at least 60 mole % and further the process comprises at least one, preferably at least two, most preferably all of the following features:
a) the amount of initiator is between 0.5 mole % and 5 mole % (% as defined above),
b) the reaction temperature is more than 190 °C, preferably at least 195 °C
c) the amount of solvent or diluent is at least 20 w%, preferably at least 30 or at least 40 wt% (relative to the total weight of monomers and diluent)

Most preferably in the process the amount of initiator is between 0.5 and 5 mole % and the amount of type (II) monomer (relative to the total amount of type (I) and type (II) monomers) is at least 60 mole %, preferably at least 73, more preferably at least 75, even more preferably at least 80 and most preferably at least 85 or 90 mole %.

Good results were obtained with a process wherein the amount of initiator is at least 0.6 mole % and the amount of type (II) monomer (relative to the total amount of type (I) and type (II) monomers) is at least 80 mole %.

The crosslinkable oligomers of the present invention have also been found to be useful in further copolymerizations. Preferably, block, branched, star, and comb-like graft crosslinkable copolymers may be formed through a further polymerization wherein the reactive oligomer is further reacted with a free radical initiator and an additional monomer or monomers. The invention also relates to the use of the crosslinkable oligomers obtainable with the process according to the invention in block, branched, star, and comb-like graft crosslinkable copolymers.

The invention also relates to a process for the preparation of a crosslinkable copolymer, comprising the process for the preparation of a crosslinkable oligomer and further comprising at least one copolymerization step wherein the crosslinkable oligomer is further reacted with at least one second free radical initiator and at least one additional monomer or monomers, the additional monomer or monomers being selected from the group consisting of the monomers of type (I), the monomers of type (II), and monomers of type (III) having two or more radically polymerisable olefinically unsaturated groups, preferably acrylate, methacrylate and/or olefinically unsaturated groups comprising substituted or unsubstituted aryl.

The further copolymerization step is preferably carried out at a temperature below 190 °C, preferably below 180 °C and more preferably below 170 °C. In case the additional monomer also comprises substantial amounts of type II monomer the temperature is preferably below 170 °C. Substantial amount is for example, more than 20 mole %. The amount of additional monomer may vary between wide ranges, typically between 2 and 90 wt % relative to the total weight of the oligomer. Preferably, the additional monomers form at least 10, preferably at least 15, more preferably at least 20 and most preferably at least 25 wt.% relative to the total weight of the block copolymer. Typically the additional monomers have an FEW of at least 10%, preferably 15, more preferably at least 20 % higher or lower than the FEW of the crosslinkable oligomer.

Such copolymerization may be performed immediately following the formation of the crosslinkable oligomers and in the same reaction vessel as the crosslinkable oligomers. One advantage of the additional copolymerization step is that the chase step can be omitted and the additional monomers are fed to the oligomers immediately after the substantial completion of the preparation of the oligomer. Alternatively, the copolymerization of the crosslinkable oligomers may be performed in a separate reaction vessel. The copolymerizations may be carried out under batch, semi-batch, continuous or loop reactor conditions.

The crosslinkable oligomers may be block copolymerized with type (II) monomers, optionally with crosslinkable functional units to enrich the concentration of crosslinkable functionality, especially in low molecular weight oligomer fractions. In a preferred embodiment the more than 50 mole % of the additional monomer or monomers are type (II) monomers. It was found that this results in less branching. Example 11 shows the advantageous use of block copolymer is in coatings showing superior hardness and solvent resistance. When crosslinkable functional type (II) monomers are used in this step, this incorporates a functionality gradient with an increase in, for example, hydroxy equivalent weight (HEW) as molecular weight of the oligomers increases. Such a functionality gradient leads to better distribution of crosslinkable functionality without the requirement of very high levels of crosslinkable functional monomers (both type (I) and type (II)). Further, in the most preferred embodiment (e.g. when all type (I) monomers have crosslinkable functionality), the oligomer fractions with type (I) monomer penultimate units, that may block-extend less efficiently with type (II) monomers, already contain at least two crosslinkable functional type (I) monomers and have more favorable crosslinkable functionality distribution. Overall, therefore, crosslinkable oligomers are formed that are enriched with at least two crosslinkable side groups per oligomer chain. The number of oligomer chains that contain no crosslinkable functionality, or only one crosslinkable functionality, is reduced. This, in turn, can lead to better network formation in crosslinking formulations. Alternatively, if the type (II) monomers contain non-crosslinkable functionality, it is possible to obtain block type crosslinkable copolymers with segmented regions of crosslinkable functionality, separated by a mid-segment with little or no crosslinkable functionality.

For example, a crosslinkable copolymer may be formed from a crosslinkable oligomer made in accordance with the present invention to which a mixture of type (I) and type (II) monomers is added, at least 50 mole % of the mixture being type (II) monomers. A crosslinkable block copolymer can be formed in which the FEW value of the crosslinkable oligomer segment is substantially different from the segments formed by the additional monomer(s). For example, the average OH value of the additional monomer (preferably a monomer mixture of type (I) and (II)) is less than half of the average OH value of the crosslinkable oligomer. The mass of the additional monomer mixture is preferably greater than half of the mass of the crosslinkable oligomer. Reversely, the average OH value of the mixture of type (I) and (II) monomers can be more than twice the average OH value of the crosslinkable oligomer and the mass of the mixture is less than half of the mass of the crosslinkable oligomer.

The crosslinkable oligomers can also be copolymerized with type (I) monomers to form branched crosslinkable copolymers or copolymerized with a monomer of the type:

(CH₂=CH)ₙ-U-(CY'=CHW')ₘ (III)

where n is greater than or equal to 0; m is greater than or equal to 0; n + m is greater than or equal to 2; Y' and W' is defined as for Y and W, respectively, in the type (II) monomers; and U is a point of attachment for more than one C=C units;
to form highly branched or star-type crosslinkable copolymers.

Suitable examples of type (III) monomers useful in the present invention include divinylbenzene, trimethylolpropane trimethacrylate, trimethylolpropane triacrylate, glycerol-1,3-dimethacrylate, polyethylene glycol 200-dimethacrylate, allyl methacrylate, 1,4-butanediol dimethacrylate, 1,4-butanediol diacrylate 1,3-butanediol dimethacrylate, ethyleneglycol dimethacrylate, ethyleneglycol diacrylate, triethylene glycol dimethacrylate, triethylene glycol diacrylate 1,6-hexanediol dimethacrylate, diurethane dimethacrylate, 2,2-bis[4-(2-hydroxy-3-methacryloyloxy-propoxy)phenyl]-propane, and 1,12-dodecanediol dimethacrylate.

The invention also relates to a process for the preparation of star type crosslinkable copolymers comprising wherein crosslinkable oligomers according to the invention are reacted with a monomer mixture wherein wherein at most 20 mole % of the additional monomer or monomers are type (III) monomers (relative to the total amount of monomers in the mixture).

It is also within the scope of this invention to copolymerize the crosslinkable oligomers with any mixture of type (I), type (II) or type (III) monomers. In all cases, the number of crosslinkable functional groups in any copolymer chain in the final product will be at least equal to the sum of the number of functional groups in every macromonomer oligomer incorporated in that copolymer chain such that the average minimum functionality of the copolymer product will increase proportionally with the average minimum functionality of the macromonomer oligomers and the average number of oligomers incorporated in the copolymer.

Certain intermediate processes may optionally be performed on the crosslinkable oligomers prior to any additional copolymerization. In one embodiment, any residual monomer that was not consumed during the polymerization may be removed in order to isolate the crosslinkable oligomers. Additionally, if solvent/diluent was added during the formation of the crosslinkable oligomers, then prior to copolymerization, such solvent/diluent may also be removed with any residual monomers in order to isolate the crosslinkable oligomers prior to beginning the copolymerization. This procedure may be performed in the same reaction vessel as the crosslinkable oligomers were prepared, or in a separate reaction vessel.

In one preferred embodiment, a chase procedure, as described above, may be performed as an intermediate process to consume any unreacted type (I) and type (II) monomers. In this case, any solvent /diluent used may be removed in order to isolate the crosslinkable oligomers prior to beginning the copolymerization. This method can improve the cost efficiency of the reaction if significant residual monomers remain. It can also lead to more well-defined copolymers by avoiding mixing of any residual monomers left over from the formation of the oligomers and the additional monomers selected for the copolymerization that would occur in the early stages of the copolymerization.

The crosslinkable oligomers of the present invention may also be used in a subsequent step wherein the crosslinkable side group functionality in the type (I) and / or type (II) monomers that have been incorporated into the crosslinkable oligomer are modified by reacting with an appropriate reagent that either retains or increases the number of crosslinkable side groups available. The new crosslinkable side group or groups may be the same as the premodified crosslinkable side group, may be a different crosslinakble side group, or may even be a mixture of two or more crosslinkable side groups. Suitable modifying reagents include any that will chemically react with the crosslinkable side groups previously described provided they do not lower the number of crosslinkable side groups available. Furthermore, such modifying reagents may be monofunctional or polyfunctional, or a mixture of modifying agents containing various degrees of functionalization. In the case of polyfunctional reagents, the functional groups may all be the same type or a combination of more than one type.

Suitable reagents have one or more of following functional groups: epoxy, silyl, isocyanato, amino, anhydride, hydroxy, iminoether, imidoether, amidoether, carbamate, cyano, lactone, lactam, carbamate (acyclic and cyclic), carbonate (acyclic and cyclic), aziridine, anhydride, amine, carboxylic acid. Suitable specific reagents include, but are nor limited to: ε-caprolactone, methyl carbamate, Cardura E-10 (glycidyl ester of neodecanoic acid), ethylene carbonate, propylene carbonate, methyl carbamate, hydroxypropyl carbamate, ammonia, isophorone diisocyanate, succinic anhydride, hexahydrophthalic anhydride, methyl hexahydrophthalic anhydride, dimethylolpropionic acid, resorcinol diglycidyl ether. It will be apparent to those skilled in the art that the choice of modifying reagent and reaction conditions will be dependant on the type of existing crosslinkable functionality in the oligomer and by the type of crosslinkable functionality desired in the resulting oligomer. For example, an oligomer with carboxylic acid crosslinkable functionality may be modified with an epoxy functional reagent producing a hydroxyl functional oligomer.

The above reaction may be carried out on the crosslinkable oligomer in the same reaction vessel as the preparation of the crosslinkable oilgomer directly after substantial formation of the crosslinkable oligomer. It may also be carried out after an optional chase procedure or the other intermediate procedures, as described above. The product of the above reaction may also be copolymerized with any mixture of type (I), type (II) or type (III) monomers as described for the crosslinkable oligomers above, since the product retains the unsaturated end group of the initial crosslinkable oligomer.

The invention further relates to crosslinkable oligomers obtainable by the process according to the invention, in particular it relates to crosslinkable oligomers comprising the reaction product of a monomer mixture comprising at least one monomer having the structure

VHC=CHX (I) ;

and at least one monomer having the structure

WHC=CYZ (II)

wherein V, W, X and Z are independently selected from the group consisting of hydrogen, R, COR, CO2H, CO2R, CN, CONH2, CONHR, CONR2, O2CR, OR or halogen, Z not being hydrogen; R is selected from the group consisting of substituted or unsubstituted alkyl, alkenyl, cycloalkyl, cycloalkenyl, heterocyclyl, amino, alkylamino, dialkylamino, aralkyl, silyl or aryl; Y is selected from the group consisting of substituted and unsubstituted alkyl, alkenyl, aryl, and aralkyl; and (I) and/or (II) may be cyclic wherein V and X are bonded together and/or W and Z are bonded together to form a ring that comprises at least four atoms; wherein the amount of the monomer or monomers of type (II) in the reaction mixture is between 55 mole % and 90 movie % based on the total number of moles of type (I) and type (II) monomers being reacted; and wherein more than 60 mole % of the monomer or monomers of type (I) have a side group containing at least one crosslinkable functional moiety, wherein the oligomer has a number average degree of polymerization between 3 and 24, an FEW between 100 and 1500 and a macromer purity (defined as the fraction in mole % of oligomers having an unsaturated end group) of at least 70 %, preferably at least 80%, more preferably at least 90% and most preferably at least 95%.

It is preferred that the crosslinkable oligomers comprise more than 80 mole %, most preferably substantially 100 mole % of the monomers of type (I) having a crosslinkable functional moiety and wherein the macromer purity is at least 80 %.

In a preferred embodiment, the crosslinkable oligomer has a weight average molecular weight between 500 and 2500 and preferably has an amount of type II monomer of at least 70 mole % (relative to the total amount of type I and type II monomers). In view of achieving a high crosslinking functionality is preferred that the crosslinkable oligomer comprises more than 10 mole % type (II) monomers having a crosslinkable functional moiety (relative to the total amount of monomers type I and II).

The invention further relates to crosslinkable block type copolymers obtainable by the process comprising inserting in a crosslinkable oligomer according to the invention additional monomers between the terminal groups of the oligomer formed by type I monomers and the rest of the oligomer resulting in a block type copolymer having essentially the same terminal crosslinkable functionality as the oligomer. Preferably the crosslinkable block type copolymers comprises a crosslinkable oligomer according to the invention that is extended by a block comprising more than 50 mole % type (II) monomers. The amount of additional monomer forming the extended block may vary between wide ranges, typically between 2 and 90 wt % relative to the total weight of the block copolymer. Preferably, the additional monomers form at least 10, preferably at least 15, more preferably at least 20 and most preferably at least 25 wt.% relative to the total weight of the block copolymer. Typically the extended block formed by the additional monomers have an FEW of at least 10%, preferably 15, more preferably at least 20 % higher or lower than the FEW of the crosslinkable oligomer.

The invention further relates to a block, branched, star or comb-like graft crosslinkable copolymer comprising the crosslinkable oligomers according to the invention and to the use of the crosslinkable oligomers according to the invention in block, branched, star or comb-like graft crosslinkable copolymers.

The invention further relates to a coating, lubricant, sealant, adhesive comprising the cross linkable oligomers and to the use of the crosslinkable oligomers the block, branched, star or comb-like graft crosslinkable copolymers comprising said crosslinkable oligomers in a coating, lubricant, sealant or adhesive composition.

The following examples are illustrative. All of the following examples were reacted in a sealed reactor vessel pressurized as indicated. A mixture of the monomers and polymerization initiator was fed into the reactor at a constant rate. The temperature of the reactor was equilibrated to the temperature(s) indicated in each example.

As otherwise indicated, type (I) and type) monomer quantities are expressed in mole % of total monomer. Polymerization initiator quantities are expressed as mole % of the total monomer quantity in moles. Concentrations of monomers in solvent are expressed as weight %, unless indicated otherwise. Molecular weights were obtained using GPC (gel permeation chromatography) with a combination of PL100 and PL1000 columns from Polymer Labs using polystyrene standards.

Macromonomer purity was determined by comparing observed Mn (GPC) with Mn calculated using NMR spectroscopy and reflects the % of oligomers with unsaturated end groups. Crosslinkable functionality incorporation in low molecular weight oligomers was determined using ESI-MS Spectroscopy. DP (degree of polymerization) was calculated using Mn obtained from GPC. All reactions were carried out either in a 6.5 liter stainless steel pressure reactor equipped with heating and cooling regulators, a mechanical stirrer, pressure and temperature gauges, and pressurized metering pumps, unless indicated otherwise, or in a glass/stainless steel 250 ml reactor with similar control accessories.

### EXAMPLE 1

In Example 1, HEA-BMA crosslinkable oligomers were prepared to illustrate the effect of type II monomer level on macromonomer purity and molecular weight distribution. Comparative experiment C1A is a comparative experiment while experiments 1B and 1C are examples of the present invention. The experiments were carried out at 4 moles/litre total monomer concentration and 1 mole% initiator level. The results are shown in Table 1.

**Comparative experiment C1A:** A 6.5-liter stainless steel pressure reactor was charged with 1170 grams of n-butyl acetate, pressurized to 75 psi and heated to 195°C. A mixture of 975.4 grams 2-hydroxyethyl acrylate, 298.6 grams n-butyl methacrylate and 15.35 grams di-t-butyl peroxide was fed into the reactor over a period of 1.5 hours. After an additional 45 minutes, the mixture was cooled, the pressure released and 1050 grams of volatiles were removed by distillation. A resin sample was further concentrated *in vacuo* to remove all volatiles and analyzed.

**Example 1B & 1C:** Using the amounts of monomers and solvent listed in Table 1 and the same procedure as Comparative experiment C1A, Examples 1B &1C were carried out. The additional heating periods, post the monomers addition, were 85 and 60 minutes and the amounts of volatiles removed were 811 and 770 grams, for 1B and 1C, respectively.

**Table 1**

| | | Monomers | Solvent | | | | | | |
|---|---|---|---|---|---|---|---|---|---|
| Example | HEA:BMA | HEA : BMA | BuAC | DP | Mn | Mw | Pd | Macromer | Wt% |
| | Mole ratio | Weight (g) | Weight (g) | | | | | Purity | Solids |
| C1A | 80 : 20 | 975 : 299 | 1170 | 18 | 2194 | 5342 | 2.43 | 53 | 52 |
| 1B | 32 : 68 | 399 : 1038 | 995 | 10 | 1291 | 2083 | 1.61 | > 95 | 59 |
| 1C | 20 : 80 | 247 : 1209 | 935 | 9 | 1255 | 2258 | 1.8 | > 95 | 61 |

Mass Spectroscopic data for Example 1C indicated the number and type of monomer units in each oligomer. The data indicated that all significant oligomers in the low molecular weight fractions contain at least one HEA unit.

| | | | | | | | | | | |
|---|---|---|---|---|---|---|---|---|---|---|
| **m/z** | 423.3 | 539.4 | 565.4 | 681.4 | 707.5 | 823.6 | 849.6 | 965.7 | 991.8 | 1107.8 |
| **# HEA units** | 1 | 2 | 1 | 2 | 1 | 2 | 1 | 2 | 1 | 2 |
| **# BMA units** | 2 | 2 | 3 | 3 | 4 | 4 | 5 | 5 | 6 | 6 |

The above results clearly, but unexpectedly, demonstrate that when the ratio of type II /type I monomers is in the range of the present invention, the macromonomer purity of the HEA-BMA crosslinkable oligomers in examples 1B and 1C is very high when compared with the macromer purity of the HEA-BMA oligomer in Comparative experiment C1A. Additionally, the use of HEA (hydroxyethyl acrylate) as the only type I monomer yields a very high concentration of low molecular weight oligomers that contain at least one crosslinkable functional group, even in example 1C where HEA levels are low.

### EXAMPLE 2

In Example 2, HEA-BMA crosslinkable oligomers were prepared to illustrate the effect of type II monomer level on macromonomer purity and molecular weight distribution. The level of initiator, 0.1 mole %, was in the lower level of the preferred range, instead of 1.0 mole % as in example 1. Comparative experiment C2A is a comparative experiment while experiments 2B and 2C are examples of the present invention. The experiments were carried out at 4 moles/liter total monomer concentration and 0.1 mole% initiator level. The results are shown in Table 2.

**Comparative experiment 2A, Example 2B and Example 2C:** Using the amounts of monomers and solvent listed in Table 2 and the procedures of Comparative experiment C1A, comparative experiment C2A, Examples 2B and 2C are made. The additional heating periods, post the monomers addition, were 30, 60 and 55 minutes and the amounts of volatiles removed were 1024, 800,and 806 grams, for C2A, 2B and 2C, respectively.

**Table 2**

| | | Monomers | Solvent | | | | | |
|---|---|---|---|---|---|---|---|---|
| Example | HEA:BMA | HEA : BMA | nBuAC | DP | Mn | Mw | Pd | Macromer |
| | Mole ratio | Weight (g) | Weight (g) | | | | | Purity |
| | | | | | | | | |
| C2A | 80 : 20 | 975 : 299 | 1170 | 24 | 2929 | 10728 | 3.66 | 68 |
| 2B | 32 : 68 | 399 : 1038 | 995 | 18 | 2225 | 5256 | 2.36 | 88 |
| 2C | 20 : 80 | 247 : 1209 | 935 | 14 | 1936 | 5373 | 2.78 | > 95 |

Again the above results clearly, but unexpectedly, demonstrate that when the ratio of Type II/Type I I monomers is in the range of the present invention, the macromonomer purity of the HEA-BMA crosslinkable oligomers in examples 2B and 2C is high when compared with the comparative experiment C2A.

### EXAMPLE 3

In Example 3, HEA-HEMA-MMA-BMA crosslinkable oligomers were prepared to illustrate the effect of initiator level on macromonomer purity and molecular weight distribution. Type II monomer level was constant at 90 mole%. The results are shown in Table 3.

**Example 3A:** A 6.5-litre stainless steel reactor was charged with 1800 grams of n-butyl acetate, pressurized to 75 psi and heated to 195°C. A mixture of 158.4 grams 2-hydroxyethyl acrylate, 325.8 grams of 2-hydroxyethyl methacrylate, 1144.8 grams n-butyl methacrylate, 171.0 grams methyl methacrylate and 23.9 grams di-t-butyl peroxide was fed into the reactor over a period of 3.3 hours. At the conclusion of the monomer feed, the reactor was cooled and a sample of resin was removed for analytical analysis.

**Example 3B and Example 3C:** Examples 3B and 3C were carried out according to the procedure of Example 3A except for the amounts of initiator which are listed in Table 3.

**Table 3**

| Example | mole% di-t-butyl peroxide | DP | Mn | Mw | Pd | Macromer |
|---|---|---|---|---|---|---|
| | | | | | | Purity |
| | | | | | | |
| 3A | 1.2 | 6 | 835 | 1100 | 1.32 | 94 |
| 3B | 3.0 | 6 | 828 | 1042 | 1.25 | 83 |
| 3C | 5.0 | 6 | 768 | 954 | 1.23 | 56 |

| | | | | | | |
|---|---|---|---|---|---|---|
| The monomer composition for 3A, 3B, and 3C is identical and equal to: HEA/HEMA/BMA/MMA: 10/18/59/13 mole %. | | | | | | |

The results of Table 3 demonstrate that macromonomer purity decreases as the level of initiator is increased and that molecular weight is low at type (II) monomer content of 90 mole%.

### EXAMPLE 4

In Example 4, HEA-BMA crosslinkable oligomers were prepared to illustrate the effect of initiator level within the preferred range of type (II) monomer levels. Experiments were carried out at 68 mole % of the type (II) monomer, BMA, and 32 mole % of the type (I) monomer, HEA. The results are shown in Table 4.

**Example 4A:** A 6.5-litre stainless steel reactor was charged with 995 grams of n-butyl acetate, pressurized to 75 psi and heated to 195°C. A mixture of 398.9 grams 2-hydroxyethyl acrylate, 1038.1 grams n-butyl methacrylate and 1.57 grams di-t-butyl peroxide was fed into the reactor over a period of 1.5 hours. After an additional 60 minutes, the mixture was cooled, the pressure was released and 800 grams of volatiles were removed by distillation. A resin sample was further concentrated *in vacuo* to remove all volatiles and analyzed.

**Example 4B and 4C:** Example 4B and 4C were carried out identically to example 4A, except that 8.63 grams di-t-butyl peroxide was used in 4B and 15.7 grams di-t-butyl peroxide was used in 4C. In example 4B, 886 grams of volatiles were removed and in example 4C 811 grams of volatiles were removed.

**TABLE 4**

| Example | mole% di-t-butyl peroxide | DP | Mn | Mw | Pd | Macromer Purity |
|---|---|---|---|---|---|---|
| | | | | | | |
| 4A | 0.1 | 17 | 2225 | 5262 | 2.36 | 88 |
| 4B | 0.6 | 11 | 1499 | 2644 | 1.76 | 94 |
| 4C | 1.0 | 10 | 1291 | 2083 | 1.61 | >95 |

The above results clearly demonstrate that macromer purity is high in the preferred range of initiator level and type (II) monomer content.

### EXAMPLE 5

In Example 5, HEA-HEMA-MMA-BMA crosslinkable oligomers were prepared to illustrate the effect of temperature on the macromer purity and molecular weight distribution. Type (II) monomer content was 90 mole% and initiator level was 1.2 mole%. The results are shown in Table 5.

**Example 5A:** A 6.5-litre stainless steel reactor was charged with 1800 grams of n-butyl acetate, pressurized to 55 psi and heated to 175°C. A mixture of 159.1 grams 2-hydroxyethyl acrylate, 326.0 grams of 2-hydroxyethyl methacrylate, 1144.7 grams n-butyl methacrylate, 171.1 grams methyl methacrylate and 23.9 grams di-t-butyl peroxide was fed into the reactor over a period of 3.3 hours. At the conclusion of the monomer feed, the reactor was cooled and a sample of resin removed for analytical analysis.

**Example 5B:** Example 5B was carried out identical to 5A except that the polymerization was carried out at 195°C and 75 psi.

**TABLE 5**

| Example | Temp (°C) | DP | Mn | Mw | Pd | Macromer |
|---|---|---|---|---|---|---|
| | | | | | | Purity |
| | | | | | | |
| 5A | 175 | 13 | 1657 | 2878 | 1.74 | 73 |
| 5B | 195 | 7 | 862 | 1372 | 1.59 | 94 |

The above results clearly demonstrate that macromer purity decreases and molecular weight increases at lower temperature and 90 mole % type (II) monomer content.

### EXAMPLE 6

In example 6, HEA-BMA crosslinkable oligomers were prepared to illustrate the effect of reaction solids on macromer purity and molecular weight distribution in the preferred range of type (II) monomer content. Experiments were carried out at 68 mole % BMA, 32 mole % HEA and 1.0 mole% di-t-butyl peroxide initiator. The solids content was 60 weight % and 75 weight %, using n-butyl acetate as solvent. The results are shown in Table 6.

**Example 6A:** A 6.5-litre stainless steel reactor was charged with 995 grams of n-butyl acetate, pressurized to 75 psi and heated to 195°C. A mixture of 398.9 grams 2-hydroxyethyl acrylate, 1038.1 grams n-butyl methacrylate and 15.7 grams di-t-butyl peroxide was fed into the reactor over a period of 1.5 hours. After an additional 60 minutes, the mixture was cooled, the pressure was released and 811 grams of volatiles were removed by distillation. A resin sample was further concentrated *in vacuo* to remove all volatiles and analyzed.

**Example 6B:** Example 6B was carried out identical to 6A, except that the amount of n-butyl acetate was 1000 grams, the amount of 2-hydroxyethyl acetate was 832.8 grams, the amount of n-butyl methacrylate was 2167.3 grams and the amount of di-t-butyl peroxide was 32.8 grams.

**TABLE 6**

| Sample | % Solids | DP | Mn | Mw | Pd | Macromer |
|---|---|---|---|---|---|---|
| | | | | | | Purity |
| | | | | | | |
| 15 | 60 | 10 | 1291 | 2083 | 1.61 | 94 |
| 16 | 75 | 11 | 1509 | 2512 | 1.66 | > 95 |

The above results clearly indicate that solids content has a minimal effect on macromer purity in preferred ranges of type (II) monomer and initiator content.

### EXAMPLE 7

In Example 7, HEA-HEMA-MMA-BMA crosslinkable oligomers were prepared to illustrate the effect of reaction solids on macromer purity and molecular weight distribution. Type (II) monomer content was 90 mole% and initiator level was 5.0 mole%. The solids content was 60 weight %, 70 weight % and 80 weight % , using n-butyl propionate as solvent. The results are shown in Table 7.

**Example 7A:** A 6.5-litre stainless steel reactor was charged with 2000 grams of n-butyl propionate, pressurized to 60 psi and heated to 200°C. A mixture of 176.0 grams 2-hydroxyethyl acrylate, 362.0 grams of 2-hydroxyethyl methacrylate, 1272.0 grams n-butyl methacrylate, 190.0 grams methyl methacrylate and 110.7 grams di-t-butyl peroxide was fed into the reactor over a period of 4 hours. At the conclusion of the monomer feed, the reactor was cooled and a sample of resin was removed for analytical analysis.

**Example 7B:** Example 7B was carried out identical to 7A with the following amounts of material: 1170 grams of n-butyl propionate, 240.2 grams 2-hydroxyethyl acrylate, 504.0 grams of 2-hydroxyethyl methacrylate, 1736.3 grams n-butyl methacrylate, 259.4 grams methyl methacrylate and 151.1 grams di-t-butyl peroxide.

**Example 7C:** Example 7C was carried out identical to 7A with the following amounts of material: 682.5 grams of n-butyl propionate, 240.2 grams 2-hydroxyethyl acrylate, 494.1 grams of 2-hydroxyethyl methacrylate, 1736.3 grams n-butyl methacrylate, 259.4 grams methyl methacrylate and 151.1 grams di-t-butyl peroxide.

**TABLE 7**

| Sample | % Solids | DP | Mn | Mw | Pd | Macromer |
|---|---|---|---|---|---|---|
| | | | | | | Purity |
| | | | | | | |
| 17 | 50 | 5 | 710 | 902 | 1.27 | 57 |
| 18 | 70 | 6 | 804 | 1073 | 1.33 | 63 |
| 19 | 80 | 7 | 874 | 1756 | 2.01 | 64 |

The above data clearly indicate that macromer purity is relatively insensitive to the total weight content of monomers and that low molecular weight oligomers can be formed under high solids conditions. The overall lower macromonomer purity observed in these examples when compared with previous examples is attributable to the use of higher levels of free radical initiator.

### EXAMPLE 8

Example 8 illustrates the preparation of a crosslinkable oligomer using an epoxy functional type (I) monomer. A 6.5-litre stainless steel reactor was charged with 640.0 grams of n-butyl propionate, pressurized to 66 psi and heated to 200°C. A mixture of 393.2 grams of 4-HBAGE (4-hydroxybutyl acrylate, glycidyl ester), 567.8 grams of n-butyl methacrylate and 8.74 grams di-t-butyl peroxide was fed into the reactor over a period of 2 hours. After an additional 40 minutes, the reactor was cooled, pressure released and a sample of resin was removed for analytical analysis. The final resin was characterized by an Mn 1082, Mw 1625, Mz 2436 and an epoxy equivalent weight of 430 mg KOH/g solids.

### EXAMPLE 9

Example 9 describe the preparation of crosslinkable oligomers made in the presence of a diluent that reacts with the crosslinkable functional group of a type (I) monomer during the polymerization step.

**Example 9A:** A 250 mL stainless steel pressure reactor was filled with 100 grams of ε-caprolactone, pressurized to 43 psi and heated to 200°C. A mixture of 29.5 g HEA, 33.0 g HEMA, 36.1 g BMA and 1.48 g of Trigonox B was fed over a period of six hours followed by cooling to ambient temperature. The solids content of the material was 94% at this stage. The reaction mixture was further concentrated by stripping *in vacuo.* The resulting materials had an Mn of 1670, Mw of 3850 and a hydroxy equivalent weight of 438. The macromeric purity was calculated to be 80%.

**Example 9B:** A 6.5-litre stainless steel reactor was charged with 1402.4 grams of Cardura E-10 (glycidyl ester of neodecanoic acid), pressurized to 62 psi and heated to 195°C. A mixture of 445.1 grams of acrylic acid, 656.3 grams of methyl methacrylate, 525.7 grams of n-butyl methacrylate and 36.3 grams di-t-butyl peroxide was fed into the reactor over a period of 2.5 hours. After an additional 40 minutes, the reactor was cooled and a sample of resin was removed for analytical analysis. Conversion was 95.7 % calculated from non-volatile solids analysis. The final polyol was characterized by an Mn 1391, Mw 2592, Mz 4176 and an acid value of 0.8 mg KOH/g solids.

Examples 9A and 9B illustrate the utility of the present invention for carrying out reactions in the presence of reactive diluents without the use of additional solvent. Example 9B further illustrates the *in situ* transformation from carboxylic acid to hydroxyl crosslinkable functionality.

### EXAMPLE 10

Example 10 was a comparative analysis of a crosslinkable oligomer prepared in accordance with the present invention and a comparative oligomer prepared from the type (I) monomer, n-butyl acrylate, which was lacking a crosslinkable functional group. Measured hydroxy equivalent weight (HEW) values, molecular weight distributions and Tg's were kept constant for the two copolymers.

Example 10A: A 250 mL stainless steel reactor was filled with 100 grams of o-dichlorobenzene and heated to 200°C under a pressure of 52 psi. Subsequently, a mixture of 27.91 grams of HEA, 70.63 grams of n-butylmethacrylate and 1.46 grams of di-t-butyl peroxide was fed to the reactor over a period of 6 hours. After cooling, the reaction product was stripped *in vacuo* to remove the volatiles. The product was characterized by an Mn of 933 and a Mw of 1271, a measured Tg of -50°C and a hydroxyl equivalent weight of 382.

Comparative experiment 10B: A 250 mL stainless steel reactor was filled with 100 grams of o-dichlorobenzene, and heated to 200°C under a pressure of 52 psi. Subsequently, a mixture of 31.65 grams of n-butylacrylate, 29.02 grams of n-butylmethacrylate, 37.85 grams of HEMA and 1.48 grams of di-t-butyl peroxide was fed to the reactor over a period of 6 hours. After cooling, the reaction product was stripped *in vacuo* to remove the volatiles. The product was characterized by an Mn of 929, a Mw of 1273, and a measured Tg of -50°C and a hydroxyl equivalent weight of 382.

Example 10C and Example 10D: Coatings Analysis for Examples 10A and 10B, respectively: Samples of 10A and 10B were evaluated in clearcoating formulations, the components of which are shown in Table 10-1. Coating panels were prepared by mixing components (i) & (ii), followed by application with a 2.0 mil Bird bar on glass plates. Viscosity increase was measured with a Brookfield viscometer.

**Table 10-1**

| | **Example 10C** | **Example 10D** |
|---|---|---|
| Component (i) | | |
| Resin example **10A** | 22.22 grams | - |
| Resin example **10B** | - | 22.20 grams |
| DBTDL (1% in xylene) | .33 grams | 1.33 grams |
| Byk 358 | 0.23 grams | 0.23 grams |
| Byk 306 | 0.06 grams | 0.05 grams |
| nBuAc | 10.45 grams | 12.63 grams |

| | | |
|---|---|---|
| Component l(ii) | | |
| HDT 100LV | 11.49 grams | 11.50 grams |
| nBuAc | 3.30 grams | 3.30 grams |

As the data in Table 10-2 indicates, the coating example 10C, comprising resin example 10A, exhibited slower viscosity increase and slower gel time compared with the coating example 10D, made with comparative resin example 10B. Both coatings exhibited similar drying times. A slower viscosity increase without adversely affecting drying characteristics is advantageous for sprayable coating formulations as it extends the usable pot-life of the formulation.

**Table 10-2**

| | **Example 10C** | **Example 10D** |
|---|---|---|
| **Viscosity** | | |
| Initial Viscosity (100s-1, cPs) | 88 | 84 |
| 30 min viscosity (100s-1, cPs) | 306 | 311 |
| 30 min viscosity (100s-1, cPs) | 1383 | 2424 |
| **Gel Time** | 90 minutes | 67 minutes |

| **Dry Times** | | |
|---|---|---|
| **Set to Touch** | 74 | 83 |
| **Dust Free** | 247 | 235 |
| **Hard Dry** | 286 | 276 |
| **Through Dry** | 358 | 366 |

### EXAMPLE 11

**Example 11** illustrates the preparation of crosslinkable oligomers with a high concentration of hydroxyl functional chain ends, block copolymerization of these crosslinkable oligomers, and the effect of crosslinkable functional group control on clearcoating properties, in accordance with the present invention. Example 11A describes the formation of a high hydroxyl functional oligomer with a hydroxyl functional, unsaturated end group. It is used in example 11 B, a copolymerization with a type (II) non-crosslinkable functional monomer, nBMA, to form a copolymer with a hydroxyl functional block, non-functional block and hydroxyl functional, unsaturated end group. Example 11C describes the formation of a low hydroxyl functional oligomer with a hydroxyl functional, unsaturated end group. It is used in example 11 D, a copolymerization with a mixture of crosslinkable and non-crosslinkable type (II) monomers, HPMA and nBMA, respectively, to form a copolymer with a random distribution of crosslinkable functionality. Example 11 E and 11 F describe coating formulations using examples 11 B and 11 D, respectively.

**Example 11A:** A high hydroxyl functional oligomer with a hydroxyl functional, unsaturated end group was formed by adding 72.5 grams of EEP (ethyl 3-ethoxypropionate) to a 250 mL stainless steel reactor. The reactor pressure was raised to 45 psi, the temperature was raised to 200°C, and a mixture of 24.9 g HEA, 83.6 g of HPMA, 56.5 g of BMA and 2.5 grams of di-t-butyl peroxide was fed into this reactor over a period of 6 hours to obtain Example 11A.

A sample of 11A was analyzed after removal of the volatiles *in vacuo* to have an Mn of 940, an Mw of 1260, and an Mz of 1724; the hydroxy equivalent weight of this material was 212. The monomer conversion at this stage was 72%.

**Example 11B:** A copolymer with a hydroxyl functional block, non-functional block and hydroxyl functional, unsaturated end group was formed by transferring 200 grams of the above reaction mixture example 11A into a second reactor. The second reactor was heated to 140°C. A mixture of 127.1 grams of BMA and 1.9 gram of AMBN initiator was added of a period of 5 hours. After the reaction mixture was maintained at 140°C for an additional 35 minutes, it was cooled to room temperature to obtain example 11 B. Example 11 B is characterized by an Mn 2110, Mw 3840, Mz 6070, and a hydroxy equivalent weight of 432.

**Example 11C:** A low hydroxyl functional macromonomer with a hydroxyl functional unsaturated end group was formed by adding 72.5 grams of EEP to a 250 mL stainless steel reactor. The reactor pressure was raised to 45 psi, the temperature was raised to 200°C, and a mixture of 24.9 g HEA, 24.8 g of HPMA, 115.3 g of BMA and 2.5 grams of di-t-butyl peroxide was fed into the reactor over a period of 6 hours to obtain Example 11C.

A sample of 11C was analyzed after removal of the volatiles *in vacuo* to have an Mn of 870, an Mw of 1150, and an Mz of 1540; the hydroxy equivalent weight of this material is 390. The monomer conversion at this stage wss 66%.

**Example 11D:** A crosslinkable copolymer with a random distribution of hydroxyl functionality and a hydroxyl functional, unsaturated end group was formed by transferring 200 grams of Example 11C into a second reactor. The second reactor was maintained at 140°C. A mixture of 50.1 grams of HPMA, 70.3 g of BMA and 1.8 gram of AMBN initiator was added over a period of 6 hours. After the reaction mixture at 140°C was maintained for an additional 30 minutes, it was cooled to room temperature to obtain Example 11D. Example 11D was characterized by an Mn 2090, Mw 3660, Mz 5510, and a hydroxy equivalent weight of 400.

**Example 11E and 11F. Coating Analysis for Examples 11B and 11D: Samples of** 11 B and 11 D were evaluated in clearcoating formulas, the components of which are shown in Table 11-1. Coating panels were prepared by mixing components (i) and (ii), followed by application either with a 2.0 mil Bird bar on glass plates, or with a 60 RDS applicator bar on Bonderite 1000 cold rolled steel plates, as indicated in the Table. Force dry conditions were 2 hours ambient cure at ambient temperature, 12 hours at 120°F and 4 hours at 140°F.

**Table 11-1**

| | **Example 11E** | **Example 11F** |
|---|---|---|
| Component (i) | | |
| Resin example **11B** | 28.77 grams | - |
| Resin example **11D** | - | 26.28 grams |
| DBTDL (1% in xylene) | 1.46 grams | 1.33 grams |
| Byk 358 | 0.25 grams | 0.23 grams |
| Byk 306 | 0.06 grams | 0.05 grams |
| nBuAc | 14.3 grams | 10.41 grams |

| | | |
|---|---|---|
| Component (ii) | | |
| HDT 100LV | 10.45 grams | 9.67 grams |
| nBuAc | 3.00 grams | 2.78 grams |

The resulting coatings data, presented in Table 11-2, illustrate that examples 11E and 11F have similar pot-life, gel time and dry times. Unexpectedly, however, example 11E, containing resin example 11 B and characterized by a block type distribution of hydroxyl functionality, exhibits superior hardness and solvent resistance properties compared to example 11 F, which contains resin example 11 D and is characterized by a more random distribution of hydroxyl functionality.

**Table 11-2**

| | **Example 11E** | **Example 11F** |
|---|---|---|
| **Viscosity** | | |
| Initial Viscosity (100s-1, cPs) | 76 | 76 |
| 60 min viscosity (100s-1, cPs) | 389 | 501 |
| 90 min viscosity (100s-1, cPs) | 1,709 | - |
| **Gel Time (hr:min)** | 102 minutes | 92 minutes |

| **Dry Times (Glass Plate)** | | |
|---|---|---|
| Set to Touch | 17 minutes | 24 minutes |
| Dust Free | 88 minutes | 86 minutes |
| Dry Through | 364 minutes | 354 minutes |

| **Hardness (cold rolled steel)** | | |
|---|---|---|
| **KPH (sec) @ 2.1 mils DFT** | | |
| **AIR DRY 1 day** | 43 | 34 |
| **AIR DRY 7 day** | 81 | 58 |
| **FORCE DRY** | 212 | 101 |
| | | |

| **MEK double rubs@ 2.1 mils DFT** | | |
|---|---|---|
| **(cold rolled steel)** | | |
| **AIR DRY 1 day** | 104 | 83 |
| **AIR DRY 2 day** | 130 | 94 |
| **AIR DRY 7 day** | 158 | 107 |
| **FORCE DRY** | 310 | 227 |

This example illustrates the advantage in controlling crosslinkable functionality distribution in a block type copolymer obtained from crosslinkable oligomers containing high concentrations of terminal unsaturation and hydroxyl functional end groups in accordance with the present invention.

### EXAMPLE 12

Example 12 illustrates the process of adding an initiator to the reaction mixture after substantial completion of the polymerization reaction. A 6.5-litre stainless steel reactor was charged with 1140.0 grams of n-butyl propionate, pressurized to 63 psi and heated to 202°C. A mixture of 875.9 grams of 2-hydroxyethyl acrylate, 37.2 grams of 2-hydroxyethyl methacrylate, 608.8 grams of methyl methacrylate, 979.0 grams of n-butyl methacrylate, 161.6 grams of isobornyl methacrylate and 69.4 grams di-t-butyl peroxide was fed into the reactor over a period of 4 hours. After an additional 40 minutes, the reactor was cooled to 158°C, the pressure lowered to 47 psi and a mixture of 15.4 grams di-t-butyl peroxide and 136.6 grams n-butyl propionate was added to the reactor over a period of 55 minutes. After an additional 50 minutes, the mixture was cooled and a sample of resin was removed for analytical analysis. Monomer conversion was 97%. The final resin was characterized by an Mn 973, Mw 1426, Mz 2091 and a color of 12 APHA.

### EXAMPLE 13

Example 13 was a comparative analysis of a crosslinkable oligomer prepared in accordance with the present invention and a comparative oligomer prepared by conventional means for higher VOC applications.

**Example 13A:** A 6.5 L stainless steel reactor was filled with 900 grams of n-butyl propionate and heated to 200°C under a pressure of 63 psi. Subsequently, a mixture of 941.2 grams of hydroxypropyl acrylate, 59.1 grams of hydroxypropyl methacrylate, 741.6 grams of methyl methacrylate, 28.6 grams of methacrylic acid, 160.5 grams of styrene, 444.8 grams of isobutyl methacrylate, 487.2 grams if isobornyl methacrylate and 14.2 grams of di-t-butyl peroxide was fed to the reactor over a period of 150 minutes. An additional 60 grams of n-butyl propionate was utilized to clear the feed lines. After an additional 45 minutes, the reactor was cooled to 145°C and the pressure adjusted to 45 psi. Subsequently, a mixture of 1.17 grams t-butyl peroxybenzoate and 98.5 grams n-butyl propionate were fed to the reactor over a total dosing period of 80 minutes. After an additional 15 minutes, the reactor was cooled and the product was isolated. The polyol was characterized with a solids content of 67.4%, a viscosity of 1800 cps, an Mn of 1611, an Mw of 3254, and an Mz of 5924.

**Coating Analysis for Examples 13A:** Sample of 13A was evaluated in clearcoat formulas, the components of which are shown in Table 12-1. For comparison, a commercial acrylic resin, Setalux 17-1447, was used. Coating panels were prepared by mixing components (i) and (ii). The initial viscosity of the paint was 25 sec Zahn #2 viscosity cup. Paint was applied either with with a 60 RDS applicator bar on Bonderite 1000 cold rolled steel plates. Force dry conditions were 4 hours ambient cure and, 15 hours at 120°F. The dry film thickness for impact testing and hardness testing was around 1.6 mils.

**Table 12-1**

| | Setalux 17-1447 (Control) | Example 13A |
|---|---|---|
| Component (i) | | |
| Resin Setalux 17-1447 (Control) | 75.00 | |
| Resin Example 13A | | 75.00 |
| Byk 358 | 0.54 | 0.55 |
| Byk 306 | 0.12 | 0.12 |
| DBTDL (1% in xylene) | 4.64 | 4.70 |
| MAK | 18.04 | 12.10 |
| Butyl Acetate | 18.04 | 12.10 |

| | | |
|---|---|---|
| Component (ii) | | |
| HDT-LV2 | 24.91 | 27.75 |
| MAK | 3.94 | 4.39 |
| Butyl Acetate | 3.94 | 4.39 |

The resulting coatings data, presented in Table 12-2, illustrate that example 13A gives lower VOC than the control. Even when the VOC of the example 13A resin is lower, the hardness values and impact values are comparable to that of the control (Setalux 17-1447).

**Table 12-2**

| | Setalux 17-1447 (Control) | Example 13A |
|---|---|---|
| VOC (Ib/gal) | 3.97 | 3.60 |
| Konig Hardness (sec) | | |
| 1 day | 77 | 54 |
| 7 day | 141 | 121 |
| 21 day | 141 | 118 |
| Forced Dry | 153 | 157 |
| Impact (inch-lbs) | | |
| Direct 21 day | 140 | 160 |
| Direct (Forced Dry) | 150 | 160 |
| Reverse 21 day | 70 | 150 |
| Reverse (Forced Dry) | 160 | 160 |

### EXAMPLE 14

Example 14 illustrates the preparation of a crosslinkable oligomer with a high concentration of hydroxyl functional chain ends, block copolymerization of these crosslinkable oligomers, and the effect of crosslinkable functional group control on clear coating properties, in accordance with the present invention. Example 14A describes the formation of a high hydroxyl functional oligomer with a hydroxyl functional, unsaturated end group. It is used in example 14B, a copolymerization with type (II) non-crosslinkable functional monomers, to form a copolymer with a hydroxyl functional block, non-functional block and hydroxyl functional, unsaturated end group. Example 14E and 14F describe coating formulations using examples 14B and a typical low solids conventional polyol prepared by random polymerization, respectively.

**Example 14A:** A high hydroxyl functional oligomer with a hydroxyl functional, unsaturated end group was formed by adding 783.6 grams of n-butyl propionate to a 6.5 L stainless steel reactor. The reactor pressure was raised to 65 psi, the temperature was raised to 200°C, and a mixture of 747.0 g 2-hydroxyethyl acrylate, 91.2 g of 2-hydroxyethyl methacrylate, 866.8 g of n-butyl methacrylate, 344.9 g of methyl methacrylate and 33.1 grams of di-t-butyl peroxide was fed into this reactor over a period of 185 minutes. At the completion of the dosing period, the temperature was maintained for an additional 20 minutes at 200°C, then lowered to 145°C. A mixture of 1.38 g of t-butyl peroxybenzoate and 69.2 g of n-butyl propionate was added over a period of 40 minutes to obtain Example 14A.

A sample of 14A was analyzed to have an Mn of 1149, an Mw of 1790, and an Mz of 2694. The monomer conversion at this stage was 94%.

**Example 14B:** A copolymer with a hydroxyl functional block, non-functional block and hydroxyl functional, unsaturated end group was formed by direct treatment of the above reaction mixture in the 6.5 L stainless steel reactor. The reactor was pressurized to 46 psi and heated to 146°C. A mixture of 314.5 g of methyl methacrylate, 331.8 g of 1-butyl methacrylate, 28.9 g of methacrylic acid, 190.4 g of isobornyl methacrylate and 14.9 g of t-butyl peroxy-2-ethylhexanoate initiator was added of a period of 220 minutes. The reaction mixture was maintained at 146°C for an additional 34 minutes. Subsequently, 285.8 g of volatiles were removed by distillation at atmospheric pressure to obtain example 14B. Example 14B is characterized by a solids content of 73.8%, an Mn of 1611 an Mw of 2604, an Mz of 3906, and a hydroxy equivalent weight of 350, based on monomer conversion.

**Coating Analysis for Examples 14:** Sample of 14B was evaluated in clearcoat formulas, the components of which are shown in Table 13-1. For comparison, a commercial acrylic resin, Setalux 17-1447, was used. Coating panels were prepared by mixing components (i) and (ii). The initial viscosity of the paint was 25 sec Zahn #2 viscosity cup. Paint was applied either with a 2.0 mil Bird bar on glass plates, or with a 60 RDS applicator bar on Bonderite 1000 cold rolled steel plates, as indicated in the Table. For QUV weathering testing, the paint was applied on a cured white basecoat with a 60 RDS applicator bar. Force dry conditions were 4 hours ambient cure and, 15 hours at 120°F. The dry film thickness for impact testing was between 1.6-1.85 mils and for MEK double rub test between 1.85-2.1 mils.

**Table 13-1**

| | Setalux 17-1447 (Control) | Example 14B |
|---|---|---|
| Component (i) | | |
| Resin Setalux 17-1447 (Control) | 75.00 | |
| Resin Example 14B | | 75.00 |
| Byk 358 | 0.54 | 0.60 |
| Byk 306 | 0.12 | 0.13 |
| DBTDL (1% in xylene) | 4.64 | 5.14 |
| MAK | 18.04 | 13.57 |
| Butyl Acetate | 18.04 | 13.57 |

| | | |
|---|---|---|
| Component (ii) | | |
| HDT-LV2 | 24.91 | 30.39 |
| MAK | 3.94 | 4.81 |
| Butyl Acetate | 3.94 | 4.81 |

The resulting coatings data, presented in Table 13-2, illustrate that example 14B gives lower VOC than the control. Hard dry and dry through times faster than the control. MEK double rubs after 8 hours, which is representative of crosslinking density, is also higher than the control. Hardness is comparable. The QUV-A exposure results show that in the absence of light stabilizers, the 20° gloss retention is slightly lower than the control whereas the yellowness index of Example 14B is significantly lower (better) than the control. All the above properties indicate that the block type distribution of hydroxy functionality exhibits faster cure and better yellowing resistance.

**Table 13-2**

| | Setalux 17-1447 (Control) | Example 14B |
|---|---|---|
| VOC (Ib/gal) | 3.97 | 3.53 |
| Dry Times (Glass Plate) | | |
| Hard Dry | 3:15 | 2:34 |
| Dry Through | 4:41 | 3:47 |
| Impact (inch-lbs) (cold rolled steel) | | |
| Direct 21 day | 140 | 160 |
| Direct (Forced Dry) | 150 | 160 |
| Reverse 21 day | 70 | 160 |
| Reverse (Forced Dry) | 160 | 160 |
| MEK double rubs (cold rolled steel) | | |
| 8 hr | 51 | 89 |
| QUV B340 Exposure (2500 hrs) | | |
| % 20° Gloss Retention | 80.7 | 73.4 |
| Yellowness Index | 7.8 | 3.9 |

This example illustrates the advantage in controlling crosslinkable functionality distribution in a block type copolymer obtained from crosslinkable oligomers containing high concentrations of terminal unsaturation and hydroxyl functional end groups in accordance with the present invention.

### Example 15

The reactor was filled with 50.23 grams of a solventless oligomeric polyester polyol (Mn 759, Mw 1068, Mz 1409, prepared from trimethylolpropane, hexahydroxyphatlic anhydride and Prifac 5908 (Ex Uniqema), hydroxyl value 276 mg KOH/g), and heated to 200°C under a pressure of 3.5 bar. Subsequently, 150 grams of a mixture of 113.8 grams of n-butylmethacrylate, 46.45 grams of hydroxyethylacrylate and 2.53 grams of Trigonox B was slowly fed to the mixture over a period of 6 hours. After cooling and releasing excess pressure, a clear resin was isolated, with a molar mass distribution characterized by the values Mn 1009, Mw 1571, Mz 2418. After stripping residual monomer in vacuo, the terminal C=C concentration was determined with NMR at 0.61 mmol/gram resin. The SEC value gives a number of chains of 0.99 mmole chains/gram resin, of which 0.33 mmoles were originally introduced as polyester. Correcting for these polyester chains, the new chains formed indicate a macromer purity of 92%.

## Claims

1. A process for the preparation of crosslinkable oligomers comprising reacting at least one monomer having the structure
VHC=CHX (I) ;
and at least one monomer having the structure
WHC=CYZ (II)
wherein V, W, X and Z are independently selected from the group consisting of hydrogen, R, COR, CO₂H, CO₂R, CN, CONH₂, CONHR, CONR₂, O₂CR, OR or halogen, Z not being hydrogen; R is selected from the group consisting of substituted or unsubstituted alkyl, alkenyl, cycloalkyl, cycloalkenyl, heterocyclyl, amino, alkylamino, dialkylamino, aralkyl, silyl or aryl; Y is selected from the group consisting of substituted and unsubstituted alkyl, alkenyl, aryl, and aralkyl; and (I) and/or (II) may be cyclic wherein V and X are bonded together and/or W and Z are bonded together to form a ring that comprises at least four atoms;
to form a reaction mixture; wherein the amount of the monomer or monomers of type (II) in the reaction mixture is between 55 mole % and 90 mole % based on the total number of moles of type (1) and type (II) monomers being reacted; and wherein more than 60 mole % of the monomer or monomers of type (I) have a side group containing at least one crosslinkable functional moiety and in which process throughout the reaction a pressure is maintained sufficient to maintain the monomers of type (I) and (II) in a substantially liquid phase and a temperature is maintained between 170°C and 260°C .

2. A process for the preparation of crosslinkable oligomers comprising reacting at least one monomer having the structure
VHC=CHX (I) ;
and at least one monomer having the structure
WHC=CYZ (II)
wherein V and X are independently selected from the group consisting of hydrogen, R, COR, CO₂R CN, CONH₂, CONHR, CONR₂, OR or halogen W and Z are independently selected from the group consisting of hydrogen, R, COR, CO₂H, CO₂R CN, CONH₂, CONHR, CONR₂, O₂CR, OR or halogen, Z not being hydrogen;
R is selected from the group consisting of substituted or unsubstituted alkyl, alkenyl, cycloalkyl, cycloalkenyl, heterocyclyl, amino, alkylamino, dialkylamino, aralkyl, silyl or aryl; Y is selected from the group consisting of substituted and unsubstituted alkyl, alkenyl, aryl, and aralkyl; and (I) and/or (II) may be cyclic wherein V and X are bonded together and/or W and Z are bonded together to form a ring that comprises at least four atoms;
to form a reaction mixture; wherein the amount of the monomer or monomers of type (II) in the reaction mixture is between 50 mole % and 95 mole % based on the total number of moles of type (I) and type (II) monomers being reacted; and wherein more than 60 mole % of the monomer or monomers of type (I) have a side group containing at least one crosslinkable functional moiety and in which process throughout the reaction a pressure is maintained sufficient to maintain the monomers of type (I) and (II) in a substantially liquid phase and a temperature is maintained between 170°C and 260°C.

3. The process of claim 1 or claim 2 wherein R is substituted and the substituent is selected from the group consisting of hydroxy, epoxy, alkoxy, acyl, acyloxy, silyl, silyloxy, silane, carboxylic acid (and salts), 1,3-dicarbonyl, isocyanato, sulfonic acid (and salts), anhydride, alkoxycarbonyl, aryloxycarbonyl, iminoether, imidoether, amidoether, lactone, lactam, amide, acetal, ketal, ketone, oxazolidinone, carbamate (acyclic and cyclic), carbonate (acyclic and cyclic), halo, dialkylamino, oxaziridine, aziridine, oxazolidine, orthoester, urea (acyclic or cyclic), oxetane, cyano and mixtures thereof.

4. A process for the preparation of crosslinkable oligomers comprising reacting at least one monomer having the structure
VHC=CHX (I) ;
and at least one monomer having the structure
WHC=CYZ (II)
wherein V, W, X and Z are independently selected from the group consisting of hydrogen, R, COR, CO₂H, CO₂R CN, CONH₂, CONHR, CONR₂, O₂CR, OR or halogen, Z not being hydrogen; R is selected from the group consisting of substituted or unsubstituted alkyl, alkenyl, cycloalkyl, cycloalkenyl, heterocyclyl, amino, alkylamino, dialkylamino, aralkyl, silyl or aryl; Y is selected from the group consisting of substituted and unsubstituted alkyl, alkenyl, aryl, and aralkyl; and (I) and/or (II) may be cyclic wherein V and X are bonded together and/or W and Z are bonded together to form a ring that comprises at least four atoms;
to form a reaction mixture; wherein the amount of the monomer or monomers of type (II) in the reaction mixture is between 50 mole % and 95 mole % based on the total number of moles of type (I) and type (II) monomers being reacted; and
wherein 60 to 100 mole % of the at least one monomer of type (I) is selected from the group of monomers having a crosslinkable moiety consisting of hydroxyethyl acrylate, hydroxypropylacryate, hydroxypentyl acrylate (all isomers), hydroxyhexyl acrylate (all isomers), hydroxybutyl acrylate (all isomers), isomers of hydroxypropyl acrylate, 4-hydroxystyrene, 1,4-cyclohexanedimethanol monoacrylate, hydroxyethyl acrylate capped with ε-caprolactone (TONE monomers), adducts of acrylic acid with mono-epoxides, 2-epoxycyclohexane, glycidol; adducts of carbonate acrylates and amines, hydroxyethyl acrylate capped with polyethylene oxide, hydroxypropylacryate capped with polyethylene oxide, hydroxyhexyl acrylate capped with polyethylene oxide, isomers of hydroxybutyl acrylate capped with polyethylene oxide, hydroxyethyl acrylate extended with polypropylene oxide, hydroxypropylacryate extended with polypropylene oxide, hydroxyhexyl acrylate extended with polypropylene oxide, isomers of hydroxybutyl acrylate extendedwith polypropylene oxide, isomers of hydroxybutyl acrylate extended with polypropylene oxide and mixtures thereof, glycidyl acrylate, 4-hydroxybutyl acrylate glycidyl ether, vinylcyclohexene oxide, allyl glycidyl ether, N-glycidyl acrylamide, acrylate monomers with an alicyclic epoxy group, and mixtures thereof or vinyloxytrimethylsilane, trimethoxysilylpropyl acrylate, triethoxysilylpropyl acrylate, dimethoxysilylpropyl acrylate, diethoxysilylpropyl acrylate, dibutoxysilylpropyl acrylate, diisopropxysilylpropyl acrylate, and mixtures thereof or, ϕ-carboxyethyl acrylate, 3-vinylbenzoic acid, 4-vinyl benzoic acid, vinyl benzoate, vinyl 4-tert-butyl benzoate, vinyl esters of versatic acid, acryloyloxyethylsuccinate, maleic acid, fumaric acid, and half-acid/esters of maleic anhydride, diacetone acrylamide, acryloyoloxy ethyl acetoacetate, 2-vinyl-1,3-dioxolane, vinyl ethylene carbonate, N-vinylcaprolactam, acrylamide, N-hydroxymethylacryamide, 2-N-ethyleneurea-ethyloxyacrylate, and 2-N-ethyleneurea-ethyl-acrylamide and mixtures thereof, or dimethylaminoethyl acrylate, diethylaminoethyl acrylate, dimethylaminoethyl acrylamide, n-t-butylaminoethyl acrylate, monomers resulting from the reaction of t-butyl amine or dialkyl amines with glycidyl acrylate, and mixtures thereof, or acrylic acid anhydride, alkenyl succinic anhydride, maleic anhydride, vinyl hexahydropthalic anhydride isomers, 3-methyl-1,2,6-tetrahydrophthalic anhydride, 2-methyl-1,3,6-tetrahydrophthalic anhydride, 2-(314 vinyl benzyl) succinic acid, (2-succinic anhydride) acrylate, bicyclo [2.2.1] hept-5-ene-2-spiro-3'-exo-succinic anhydride, alkenyl succinic anhydrides, and mixtures thereof, or methylated N-methylol acrylamide, butylated N-methylol acrylamide, vinyl N-alkoxymethyl derivative of succinimide, phthalimide, N-alkoxymethyl 1,2,3,6-tetrahydrophthalimide anhydride, N-alkoxymethylmaleimide, and mixtures thereof and 0 to 40 mole % of the at least one type (I) monomers is chosen from the group of type (I) monomers not having a crosslinkable functional moiety consisting of methyl acrylate, ethyl acrylate, propyl acrylate, isomers of propyl acrylate, butyl acrylate, isomers of butyl acrylate, hexyl acrylate, 2-ethylbutyl acrylate, 2-ethylhexyl acrylate, isobornyl acrylate, isoamyl acrylate, benzyl acrylate, phenyl acrylate, cyclohexyl acrylate, lauryl acrylate, isodecyl acrylate, styrene, cetyl acrylate, and mixtures thereof, and in which process throughout the reaction a pressure is maintained sufficient to maintain the monomers of type (I) and (II) in a substantially liquid phase and a temperature is maintained between 170°C and 260°C.

5. The process according to any of claims 1 to 4 wherein the at least one monomer of type (II) is selected from the group of type (II) monomers not containing a crosslinkable functional moiety consisting of methyl methacrylate, ethyl methacrylate, propyl methacrylate, isomers of propyl methacrylate, butyl methacrylate, isomers of butyl methacrylate, hexyl methacrylate, 2-ethylbutyl methacrylate, crotyl methacrylate, 2-ethylhexyl methacrylate, isobornyl methacrylate, isoamyl methacrylate, benzyl methacrylate, phenyl methacrylate, tetrahydrofurfuryl methacrylate, 3,3,5-trimethylcyclohexyl methacrylate, alphamethylstyrene, cyclohexyl methacrylate, stearyl methacrylate, lauryl methacrylate, isodecyl methacrylate, and mixtures thereof or selected from the group of type (II) monomers containing a crosslinkable functional moiety consisting of glycidyl methacrylate, 2-hydroxyethyl methacrylate, hydroxypropyl methacrylate, isomers of hydroxypropyl methacrylate, hydroxybutyl methacrylate, isomers of hydroxybutyl methacrylate, glycerolmonomethacrylate, methacrylic acid, itaconic anhydride, citraconic anhydride, dimethylaminoethyl methacrylate , diethylaminoethyl methacrylate, dimethylaminopropyl methacrylamide, 2-tert-butyl aminoethyl methacrylate, triethyleneglycol methacrylate, methacrylamide, N,N-dimethyl methacrylamide, N-tert-butyl methacrylamide, N-methylol methacrylamide, N-ethylol methacrylamide, alphamethylvinyl benzoic acid (all isomers), diethylamino alphamethylstyrene, 2-isocyanatoethyl methacrylate, isomers of diethylamino alphamethylstyrene, trimethoxysilylpropyl methacrylate, triethoxysilylpropyl methacrylate, methacrylic acid, tributoxysilylpropyl methacrylate, dimethoxymethylsilylpropyl methacrylate, diisopropoxymethylsilylpropyl methacrylate, dimethoxysilylpropyl methacrylate, diethoxysilylpropyl methacrylate, dibutoxysilylpropyl methacrylate, diisopropoxysilylpropyl methacrylate, isobutylene, and mixtures thereof

6. The process according to any of claims 1 to 4, wherein the Z and X are carboxylic acid, carboxylic acid ester or substituted or unsubstituted aryl groups.

7. The process according to any of claims 1 to 4further comprising adding at least one free radical initiator to the monomers of type (I) and (II) in an amount between 0.1 mole % and 5 mole % based on the total number of moles of monomer being reacted.

8. The process according to any of claims 1 to 4 further comprising adding at least one solvent or diluent to the monomers of type (I) and (II).

9. The process according to claim 8 wherein the solvent is an ester solvent selected from the group consisting of methyl acetate, ethyl acetate, n-butyl acetate, n-butyl proprionate, isobutyl acetate, n-pentyl propionate, n-propyl acetate, isopropyl acetate, amyl acetate, and isobutyl isobutyrate.

10. A process according to claim 8 in which the solvent or diluent is an oligomeric polyester with an OH value of at least 100 mg KOH/g, and a number average molecular weight of less than 2000.

11. A process according to claim 8 in which the solvent or diluent are reactive under the conditions of the polymerization independent of the radical reactions or are inert or substantially inert under the conditions of the polymerization but are reactive under post polymerization conditions including coating crosslinking reactions.

12. The process according to any of claims 1 to 4 comprising adding at least one free radical initiator at the substantial completion of the reaction at a temperature below 170°C to react residual monomer.

13. The process according to any of claims 1 to 4 comprising removal of residual unreacted monomer directly after the substantial completion of the reaction without addition of at least one free radical initiator at a temperature below 170°C.

14. The process according to any of claims 1 to 4 wherein the monomer mixture comprise at least 10 mole % monomers having a crosslinkable functional moiety (relative to the total amount of monomers of type (I) and type (II)).

15. The process according to claim 14 wherein the monomer mixture comprises at least 10 mole % (relative to the total amount of monomers of type (I) and type (II)) of type (I) monomers having a crosslinkable functional moiety and in total at least 20 mole % of monomers having a crosslinkable functional moiety.

16. The process according to any of claims 1 to 4 wherein more than 80 mole %, most preferably substantially 100 mole % of the monomers of type (I) have a crosslinkable functional moiety.

17. The process according to any of claims 1 to 4 wherein the type (II) monomers comprise more than 5 mole % monomers having a crosslinkable functional moiety.

18. The process according to any of claims 1 to 4 wherein the macromer purity (defined as the fraction in mole % of oligomers having an unsaturated end group) is at least 70 mole %.

19. The process according to claim 1 wherein the oligomer has a weight average molecular weight between 500 and 2500.

20. The process according to claim 19 wherein the amount of type II monomer (relative to the total amount of type (I) and type (II) monomers) is at least 60 mole % and further comprising at least one of the following features:
a) the amount of initiator is between 0.5 mole % and 5 mole %,
b) the reaction temperature is more than 190 °C
c) the amount of solvent or diluent is at least 20 w%

21. The process according to claim 20 wherein the amount of initiator is between 0.5 and 5 mole % and the amount of type (II) monomer (relative to the total amount of type (I) and type (II) monomers) is at least 60 mole %.

22. The process according to claim 20 wherein the amount of initiator is at least 0.6 mole % and the amount of type (II) monomer (relative to the total amount of type (I) and type (II) monomers) is at least 80 mole %.

23. A process for the preparation of a crosslinkable copolymer, comprising the process according to any one of claims 1 to 22 and further comprises at least one copolymerization step wherein the crosslinkable oligomer obtained in the process according to claim 1 to 22 is further reacted with at least one second free radical initiator and at least one additional monomer or monomers, the additional monomer or monomers being selected from the group consisting of the monomers of type (I), the monomers of type (II), and monomers of type (III) having two or more radically polymerisable olefinically unsaturated groups, preferably acrylate, methacrylate and/or olefinically unsaturated groups comprising substituted or unsubstituted aryl .

24. The process according to claim 23 wherein monomers of type (III) have the following structure:
(CH₂=CH)ₙ-U-(CY'=CHW')ₘ (III)
where n is greater than or equal to 0; m is greater than or equal to 0; n + m is greater than or equal to 2; Y' and W' are defined as for Y and W, respectively, in the type (II) monomers; and U is a point of attachment for more than one C=C units.

25. The process of claim 23 wherein the type (III) monomer is selected from the group consisting of divinylbenzene, trimethylolpropane trimethacrylate, trimethylolpropane triacrylate, glycerol-1,3-dimethacrylate, polyethylene glycol 200-dimethacrylate, allyl methacrylate, 1,4-butanediol dimethacrylate, 1,4-butanediol diacrylate 1,3-butanediol dimethacrylate, ethyleneglycol dimethacrylate, ethyleneglycol diacrylate, triethylene glycol dimethacrylate, triethylene glycol diacrylate 1,6-hexanediol dimethacrylate, diurethane dimethacrylate, 2,2-bis[4-(2-hydroxy-3-methacryloyloxy-propoxy)phenyl]-propane, 1,12-dodecanediol dimethacrylate, and mixtures thereof.

26. The process for the preparation of a crosslinkable copolymer according to claim 23, wherein the further copolymerization step is carried out at a temperature below 190 °C and preferably below 170 °C in case the additional monomer also comprises substantial amount of type II monomer.

27. The process for the preparation of a crosslinkable copolymer according to claim 26, wherein directly after the substantial completion of the preparation of the oligomer according to claims 1 - 22, the additional monomers are fed to the oligomers.

28. A process for the preparation of block type crosslinkable copolymers comprising the process according to claim 23 wherein more than 50 mole % of the additional monomer or monomers are type (II) monomers.

29. The process for the preparation of block type crosslinkable copolymers according to claim 28, wherein the FEW value of the crosslinkable oligomer segment is substantially different from the segment(s) formed by the additional monomer(s).

30. The process for the preparation of block type crosslinkable copolymers according to claim 28, wherein the average OH value of the additional monomer or monomers is less than half of the average OH value of the crosslinkable oligomer;

31. The process according to claim 30 wherein the mass of the additional monomer or monomers is greater than half of the mass of the crosslinkable oligomer.

32. The process for the preparation of block type crosslinkable copolymers according to claim 27 wherein the average OH value of the additional monomer or monomers is more than twice the average OH value of the crosslinkable oligomer

33. The process according to claim 32 wherein the mass of the additional monomer or monomers is less than half of the mass of the crosslinkable oligomer.

34. A process for the preparation of star type crosslinkable copolymers comprising the process according to claim 23 wherein at most 20 mole % of the additional monomer or monomers are type (III) monomers (relative to the total amount of monomers in the mixture).

35. A process for the preparation of crosslinkable oligomers comprising reacting at least one monomer having the structure
VHC=CHX (I) ;
and at least one monomer having the structure
WHC=CYZ (II)
wherein V, W, X and Z are independently selected from the group consisting of hydrogen, R, COR, CO₂H, CO₂R CN, CONH₂, CONHR, CONR₂, O₂CR OR or halogen, Z not being hydrogen; R is selected from the group consisting of substituted or unsubstituted alkyl, alkenyl, cycloalkyl, cycloalkenyl, heterocyclyl, amino, alkylamino, dialkylamino, aralkyl, silyl or aryl; Y is selected from the group consisting of substituted and unsubstituted alkyl, alkenyl, aryl, and aralkyl; and (I) and/or (II) may be cyclic wherein V and X are bonded together and/or W and Z are bonded together to form a ring that comprises at least four atoms;
to form a reaction mixture; wherein the amount of the monomer or monomers of type (II) in the reaction mixture is between 50 mole % and 95 mole % based on the total number of moles of type (I) and type (II) monomers being reacted; and wherein more than 60 mole % of the monomer or monomers of type (I) have a side group containing at least one crosslinkable functional moiety and in which process throughout the reaction a pressure is maintained sufficient to maintain the monomers of type (I) and (II) in a substantially liquid phase and a temperature is maintained between 170°C and 260°C and at least one additional step wherein the crosslinkable oligomer is further reacted with one or more reagents having at least one functional group wherein said functional group is capable of modifying one or more of the crosslinkable functional moieties of the type (I) or type (II) monomer or monomers to obtain a new crosslinkable oligomer.

36. The process according to claim 35 wherein the functional group is seletected from the group consisting of epoxy, silyl, isocyanato, amino, anhydride, hydroxy, iminoether, imidoether, amidoether, carbamate, cyano, lactone, lactam, carbamate (acyclic and cyclic), carbonate (acyclic and cyclic), aziridine, anhydride, amine, carboxylic acid, and mixtures thereof.

37. Crosslinkable oligomers obtainable by the process according to anyone of claims
1 to 22.

38. Crosslinkable oligomers comprising the reaction product of the process of any of claims 1 to 4 , wherein the oligomer has a number average degree of polymerization between 3 and 24, an FEW between 100 and 2000 and a macromer purity (defined as the fraction in mole % of oligomers having an unsaturated end group) of at least 70 %.

39. The crosslinkable oligomers according to claim 38, wherein more than 80 mole %, most preferably substantially 100 mole % of the monomers of type (I) have a crosslinkable functional moiety and wherein the macromer purity is at least 80 %.

40. The crosslinkable oligomer according to claim 38 having a weight average molecular weight between 500 and 2500.

41. The crosslinkable oligomer according to claim 40 wherein the amount of type II monomer is at least 70 mole %.

42. The crosslinkable oligomer according to claim 38 comprising more than 10 mole % type (II) monomers having a crosslinkable functional moiety (relative to the total amount of monomers type I and II).

43. A crosslinkable block type copolymers obtainable by the process according to anyone of claims 28 to 33, **characterized in that** a block of additional monomers is inserted in the oligomer between the unsaturated terminal groups of the oligomer formed from type I monomer(s) and the rest of the oligomer thereby having essentially the same terminal crosslinkable functionality as the oligomer.

44. A crosslinkable block type copolymers comprising an oligomer according to claim
37 to 42 that is extended by a block comprising more than 50 mole % type (II) monomers.

45. A block, branched, star or comb-like graft crosslinkable copolymer comprising the crosslinkable oligomers of claim 37 or 38.

46. A coating, lubricant, sealant, adhesive comprising the cross linkable oligomers of claim 37 to 38.

47. The use of the crosslinkable oligomers according to claims 37 to 42 in block, branched, star or comb-like graft crosslinkable copolymers.

48. The use of the crosslinkable oligomers according to claims 37 to 42, the block, branched, star or comb-like graft crosslinkable copolymers comprising said crosslinkable oligomers, in a method of manufacturing a coating, lubricant, sealant or adhesive composition.

## Patentansprüche

1. Verfahren zur Herstellung von vernetzbaren Oligomeren, umfassend das Umsetzen wenigstens eines Monomers mit der Struktur
VHC=CHX (I)
und wenigstens eines Monomers mit der Struktur
WHC=CYZ (II)
wobei V, W, X und Z unabhängig aus der Gruppe ausgewählt sind, die aus Wasserstoff, R, COR, CO₂H, CO₂R, CN, CONH₂, CONHR, CONR₂, O₂CR, OR oder Halogen besteht, wobei Z nicht Wasserstoff ist; R aus der Gruppe ausgewählt ist, die aus substituiertem oder unsubstituiertem Alkyl, Alkenyl, Cycloalkyl, Cycloalkenyl, Heterocyclyl, Amino, Alkylamino, Dialkylamino, Aralkyl, Silyl oder Aryl besteht; Y aus der Gruppe ausgewählt ist, die aus substituiertem und unsubstituiertem Alkyl, Alkenyl, Aryl und Aralkyl besteht; und (I) und/oder (II) cyclisch sein kann, wobei V und X aneinander gebunden sind, und/oder W und Z unter Bildung eines Rings, der wenigstens vier Atome umfasst, aneinander gebunden sind;
unter Bildung eines Reaktionsgemischs, wobei die Menge des Monomers oder der Monomere des Typs (II) in dem Reaktionsgemisch zwischen 55 Mol-% und 90 Mol-% liegt, bezogen auf die gesamte Stoffmenge der Monomere von Typ (I) und Typ (II), die miteinander umgesetzt werden, und wobei mehr als 60 Mol-% des Monomers oder der Monomere des Typs (I) eine Seitengruppe aufweisen, die wenigstens eine vernetzbare funktionelle Gruppe enthält, und wobei während der gesamten Reaktion bei dem Verfahren ein ausreichender Druck aufrechterhalten wird, um die Monomere von Typ (I) und (II) in einer im Wesentlichen flüssigen Phase zu halten, und eine Temperatur zwischen 170 °C und 260 °C aufrechterhalten wird.

2. Verfahren zur Herstellung von vernetzbaren Oligomeren, umfassend das Umsetzen wenigstens eines Monomers mit der Struktur
VHC=CHX (I)
und wenigstens eines Monomers mit der Struktur
WHC=CYZ (II)
wobei V und X unabhängig aus der Gruppe ausgewählt sind, die aus Wasserstoff, R, COR, CO₂R CN, CONH₂, CONHR, CONR₂, OR oder Halogen besteht, W und Z unabhängig aus der Gruppe ausgewählt sind, die aus Wasserstoff, R, COR, CO₂H CO₂R CN, CONH₂, CONHR, CONR₂, O₂CR OR oder Halogen besteht, wobei Z nicht Wasserstoff ist;
R aus der Gruppe ausgewählt ist, die aus substituiertem oder unsubstituiertem Alkyl, Alkenyl, Cycloalkyl, Cycloalkenyl, Heterocyclyl, Amino, Alkylamino, Dialkylamino, Aralkyl, Silyl oder Aryl besteht; Y aus der Gruppe ausgewählt ist, die aus substituiertem und unsubstituiertem Alkyl, Alkenyl, Aryl und Aralkyl besteht; und (I) und/oder (II) cyclisch sein kann, wobei V und X aneinander gebunden sind, und/oder W und Z unter Bildung eines Rings, der wenigstens vier Atome umfasst, aneinander gebunden sind;
unter Bildung eines Reaktionsgemischs, wobei die Menge des Monomers oder der Monomere des Typs (II) in dem Reaktionsgemisch zwischen 50 Mol-% und 95 Mol-% liegt, bezogen auf die gesamte Stoffmenge der Monomere von Typ (I) und Typ (II), die miteinander umgesetzt werden, und wobei mehr als 60 Mol-% des Monomers oder der Monomere des Typs (I) eine Seitengruppe aufweisen, die wenigstens eine vernetzbare funktionelle Gruppe enthält, und wobei während der gesamten Reaktion bei dem Verfahren ein ausreichender Druck aufrechterhalten wird, um die Monomere von Typ (I) und (II) in einer im Wesentlichen flüssigen Phase zu halten, und eine Temperatur zwischen 170 °C und 260 °C aufrechterhalten wird.

3. Verfahren gemäß Anspruch 1 oder 2, wobei R substituiert ist und der Substituent aus der Gruppe ausgewählt ist, die aus Hydroxy, Epoxy, Alkoxy, Acyl, Acyloxy, Silyl, Silyloxy, Silan, Carbonsäure (und Salzen), 1,3-Dicarbonyl, Isocyanato, Sulfonsäure (und Salzen), Anhydrid, Alkoxycarbonyl, Aryloxycarbonyl, Iminoether, Imidoether, Amidoether, Lacton, Lactam, Amid, Acetal, Ketal, Keton, Oxazolidinon, Carbamat (acyclisch und cyclisch), Carbonat (acyclisch und cyclisch), Halogen, Dialkylamino, Oxaziridin, Aziridin, Oxazolidin, Orthoester, Harnstoff (acyclisch oder cyclisch), Oxetan, Cyano und Gemischen davon besteht.

4. Verfahren zur Herstellung von vernetzbaren Oligomeren, umfassend das Umsetzen wenigstens eines Monomers mit der Struktur
VHC=CHX (I)
und wenigstens eines Monomers mit der Struktur
WHC=CYZ (II)
wobei V, W, X und Z unabhängig aus der Gruppe ausgewählt sind, die aus Wasserstoff, R, COR, CO₂H CO₂R CN, CONH₂, CONHR, CONR₂, O₂CR OR oder Halogen besteht, wobei Z nicht Wasserstoff ist; R aus der Gruppe ausgewählt ist, die aus substituiertem oder unsubstituiertem Alkyl, Alkenyl, Cycloalkyl, Cycloalkenyl, Heterocyclyl, Amino, Alkylamino, Dialkylamino, Aralkyl, Silyl oder Aryl besteht; Y aus der Gruppe ausgewählt ist, die aus substituiertem und unsubstituiertem Alkyl, Alkenyl, Aryl und Aralkyl besteht; und (I) und/oder (II) cyclisch sein kann, wobei V und X aneinander gebunden sind, und/oder W und Z unter Bildung eines Rings, der wenigstens vier Atome umfasst, aneinander gebunden sind;
unter Bildung eines Reaktionsgemischs, wobei die Menge des Monomers oder der Monomere des Typs (II) in dem Reaktionsgemisch zwischen 50 Mol-% und 95 Mol-% liegt, bezogen auf die gesamte Stoffmenge der Monomere von Typ (I) und Typ (II), die miteinander umgesetzt werden, und wobei 60 bis 100 Mol-% des wenigstens einen Monomers des Typs (I) aus der Gruppe der eine vernetzbare Gruppe aufweisenden Monomere ausgewählt ist, die aus Folgenden besteht: Hydroxyethylacrylat, Hydroxypropylacrylat, Hydroxypentylacrylat (allen Isomeren), Hydroxyhexylacrylat (allen Isomeren), Hydroxybutylacrylat (allen Isomeren), Isomeren von Hydroxypropylacrylat, 4-Hydroxystyrol, 1,4-Cyclohexandimethanolmonoacrylat, mit ε-caprolacton verkapptem Hydroxyethylacrylat (TONE-Monomeren), Addukten von Acrylsäure mit Monoepoxiden, 2-Epoxycyclohexan, Glycidol; Addukten von Carbonatacrylaten und Aminen, mit Polyethylenoxid verkapptem Hydroxyethylacrylat, mit Polyethylenoxid verkapptem Hydroxypropylacrylat, mit Polyethylenoxid verkapptem Hydroxyhexylacrylat, mit Polyethylenoxid verkappten Isomeren von Hydroxybutylacrylat, mit Polypropylenoxid verlängertem Hydroxyethylacrylat, mit Polypropylenoxid verlängertem Hydroxypropylacrylat, mit Polypropylenoxid verlängertem Hydroxyhexylacrylat, mit Polypropylenoxid verlängerten Isomeren von Hydroxybutylacrylat, mit Polypropylenoxid verlängerten Isomeren von Hydroxybutylacrylat und Gemischen davon, Glycidylacrylat, 4-Hydroxybutylacrylatglycidylether, Vinylcyclohexenoxid, Allylglycidylether, N-Glycidylacrylamid, Acrylatmonomeren mit einer alicyclischen Epoxidgruppe und Gemischen davon oder Vinyloxytrimethylsilan, Trimethoxysilylpropylacrylat, Triethoxysilylpropylacrylat, Dimethoxysilylpropylacrylat, Diethoxysilylpropylacrylat, Dibutoxysilylpropylacrylat, Diisopropoxysilylpropylacrylat und Gemische davon oder β-Carboxyethylacrylat, 3-Vinylbenzoesäure, 4-Vinylbenzoesäure, Vinylbenzoat, Vinyl-4-tert-butylbenzoat, Vinylester von Versatic Acid, Acryloyloxyethylsuccinat, Maleinsäure, Fumarsäure und Halbsäure/ester von Maleinsäureanhydrid, Diacetonacrylamid, Acryloyloxyethylacetoacetat, 2-Vinyl-1,3-dioxolan, Vinylethylencarbonat, N-Vinylcaprolactam, Acrylamid, N-Hydroxymethylacrylamid, 2-N-Ethylenharnstoffethyloxyacrylat und 2-N-Ethylenharnstoffethylacrylamid und Gemischen davon oder Dimethylaminoethylacrylat, Diethylaminoethylacrylat, Dimethylaminoethylacrylamid, N-t-Butylaminoethylacrylat, Monomeren, die aus der Reaktion von t-Butylamin oder Dialkylaminen mit Glycidylacrylat resultieren, und Gemischen davon oder Acrylsäureanhydrid, Alkenylbernsteinsäureanhydrid, Maleinsäureanhydrid, Vinylhexahydrophthalsäureanhydrid-Isomeren, 3-Methyl-1,2,6-tetrahydrophthalsäureanhydrid, 2-Methyl-1,3,6-tetrahydrophthalsäureanhydrid, 2-(3,4-Vinylbenzyl)bernsteinsäure, (2-Bernsteinsäureanhydrid)acrylat, Bicyclo-[2.2.1]hept-5-en-2-spiro-3'-exo-bernsteinsäureanhydrid, Alkenylbernsteinsäureanhydriden und Gemischen davon oder methyliertem N-Methylolacrylamid, butyliertem N-Methylolacrylamid, Vinyl-N-alkoxymethyl-Derivat von Succinimid, Phthalimid, N-Alkoxymethyl-1,2,3,6-tetra-hydrophthalimidanhydrid, N-Alkoxymethylmaleinimid und Gemischen davon, und 0 bis 40 Mol-% des wenigstens einen Monomers des Typs (I) aus der Gruppe der keine vernetzbare funktionelle Gruppe aufweisenden Monomere des Typs (I) ausgewählt ist, die aus Folgenden besteht: Methylacrylat, Ethylacrylat, Propylacrylat, Isomeren von Propylacrylat, Butylacrylat, Isomeren von Butylacrylat, Hexylacrylat, 2-Ethylbutylacrylat, 2-Ethylhexylacrylat, Isobornylacrylat, Isoamylacrylat, Benzylacrylat, Phenylacrylat, Cyclohexylacrylat, Laurylacrylat, Isodecylacrylat, Styrol, Cetylacrylat und Gemischen davon, und wobei während der gesamten Reaktion bei dem Verfahren ein ausreichender Druck aufrechterhalten wird, um die Monomere von Typ (I) und (II) in einer im Wesentlichen flüssigen Phase zu halten, und eine Temperatur zwischen 170 °C und 260 °C aufrechterhalten wird.

5. Verfahren gemäß einem der Ansprüche 1 bis 4, wobei das wenigstens eine Monomer von Typ (II) aus der Gruppe der keine vernetzbare funktionelle Gruppe aufweisenden Monomere des Typs (II) ausgewählt ist, die aus Folgenden besteht: Methylmethacrylat, Ethylmethacrylat, Propylmethacrylat, Isomeren von Propylmethacrylat, Butylmethacrylat, Isomeren von Butylmethacrylat, Hexylmethacrylat, 2-Ethylbutylmethacrylat, Crotylmethacrylat, 2-Ethylhexylmethacrylat, Isobornylmethacrylat, Isoamylmethacrylat, Benzylmethacrylat, Phenylmethacrylat, Tetrahydrofurfurylmethacrylat, 3,3,5-Trimethylcyclohexylmethacrylat, α-Methylstyrol, Cyclohexylmethacrylat, Stearylmethacrylat, Laurylmethacrylat, Isodecylmethacrylat und Gemischen davon oder aus der Gruppe der eine vernetzbare funktionelle Gruppe aufweisenden Monomere des Typs (II) ausgewählt ist, die aus Folgenden besteht: Glycidylmethacrylat, 2-Hydroxyethylmethacrylat, Hydroxypropylmethacrylat, Isomeren von Hydroxypropylmethacrylat, Hydroxybutylmethacrylat, Isomeren von Hydroxybutylmethacrylat, Glycerinmonomethacrylat, Methacrylsäure, Itaconsäureanhydrid, Citraconsäureanhydrid, Dimethylaminoethylmethacrylat, Diethylaminoethylmethacrylat, Dimethylaminopropylmethacrylamid, 2-tert-Butylaminoethylmethacrylat, Triethylenglycolmethacrylat, Methacrylamid, N,N-Dimethylmethacrylamid, N-tert-Butylmethacrylamid, N-Methylolmethacrylamid, N-Ethylolmethacrylamid, a-Methylvinylbenzoesäure (allen Isomeren), Diethylamino-αmethylstyrol, 2-Isocyanatoethylmethacrylat, Isomeren von Diethylaminoa-methylstyrol, Trimethoxysilylpropylmethacrylat, Triethoxysilylpropylmethacrylat, Methacrylsäure, Tributoxysilylpropylmethacrylat, Dimethoxymethylsilylpropylmethacrylat, Diisopropoxymethylsilylpropylmethacrylat, Dimethoxysilylpropylmethacrylat, Diethoxysilylpropylmethacrylat, Dibutoxysilylpropylmethacrylat, Diisopropoxysilylpropylmethacrylat, Isobutylen und Gemischen davon.

6. Verfahren gemäß einem der Ansprüche 1 bis 4, wobei es sich bei Z und X um Carbonsäure-, Carbonsäureester- oder substituierte oder unsubstituierte Arylgruppen handelt.

7. Verfahren gemäß einem der Ansprüche 1 bis 4, das weiterhin das Hinzufügen wenigstens eines Radikalstarters zu den Monomeren von Typ (I) und (II) in einer Menge zwischen 0,1 Mol-% und 5 Mol-%, bezogen auf die gesamte Stoffmenge der Monomere, die miteinander umgesetzt werden, umfasst.

8. Verfahren gemäß einem der Ansprüche 1 bis 4, das weiterhin das Hinzufügen wenigstens eines Lösungsmittels oder Verdünnungsmittels zu den Monomeren des Typs (I) und (II) umfasst.

9. Verfahren gemäß Anspruch 8, wobei das Lösungsmittel ein Esterlösungsmittel ist, das aus der Gruppe ausgewählt ist, die aus Methylacetat, Ethylacetat, n-Butylacetat, n-Butylpropionat, Isobutylacetat, n-Pentylpropionat, n-Propylacetat, Isopropylacetat, Amylacetat und Isobutylisobutyrat besteht.

10. Verfahren gemäß Anspruch 8, wobei das Lösungsmittel oder Verdünnungsmittel ein oligomerer Polyester mit einer OH-Zahl von wenigstens 100 mg KOH/g und einem Zahlenmittel des Molekulargewichts von weniger als 2000 ist.

11. Verfahren gemäß Anspruch 8, wobei das Lösungsmittel oder Verdünnungsmittel unter den Bedingungen der Polymerisation unabhängig von der Radikalreaktionen reaktiv sind oder unter den Bedingungen der Polymerisation inert oder im Wesentlichen inert sind, aber unter Nachpolymerisationsbedingungen einschließlich Beschichtungsvernetzungsreaktionen reaktiv sind.

12. Verfahren gemäß einem der Ansprüche 1 bis 4, das das Hinzufügen wenigstens eines Radikalstarters, wenn die Reaktion im Wesentlichen beendet ist, bei einer Temperatur unter 170 °C zur Umsetzung des restlichen Monomers umfasst.

13. Verfahren gemäß einem der Ansprüche 1 bis 4, das das Entfernen von restlichem nicht umgesetztem Monomer, direkt nachdem die Reaktion im Wesentlichen beendet ist, umfasst, ohne wenigstens einen Radikalstarter bei einer Temperatur unter 170 °C hinzuzufügen.

14. Verfahren gemäß einem der Ansprüche 1 bis 4, wobei das Monomergemisch wenigstens 10 Mol-% Monomere mit einer vernetzbaren funktionellen Gruppe umfasst (relativ zur Gesamtmenge der Monomere des Typs (I) und des Typs (II)).

15. Verfahren gemäß Anspruch 14, wobei das Monomergemisch wenigstens 10 Mol-% (relativ zur Gesamtmenge der Monomere des Typs (I) und des Typs (II)) Monomere des Typs (I) mit einer vernetzbaren funktionellen Gruppe und insgesamt wenigstens 20 Mol-% Monomere mit einer vernetzbaren funktionellen Gruppe umfasst.

16. Verfahren gemäß einem der Ansprüche 1 bis 4, wobei mehr als 80 Mol-%, am meisten bevorzugt im Wesentlichen 100 Mol-%, der Monomere des Typs (I) eine vernetzbare funktionelle Gruppe aufweisen.

17. Verfahren gemäß einem der Ansprüche 1 bis 4, wobei die Monomere des Typs (II) mehr als 5 Mol-% Monomere mit einer vernetzbaren funktionellen Gruppe umfassen.

18. Verfahren gemäß einem der Ansprüche 1 bis 4, wobei die Makromerreinheit (definiert als Anteil der Oligomere mit einer ungesättigten Endgruppe in Mol-%) wenigstens 70 Mol-% beträgt.

19. Verfahren gemäß Anspruch 1, wobei das Oligomer ein Gewichtsmittel des Molekulargewichts zwischen 500 und 2500 aufweist.

20. Verfahren gemäß Anspruch 19, wobei die Menge des Typ-II-Monomers (relativ zur Gesamtmenge der Monomere des Typs (I) und des Typs (II)) wenigstens 60 Mol-% beträgt und das Verfahren weiterhin wenigstens eines der folgenden Merkmale umfasst:
a) die Menge des Starters liegt zwischen 0,5 Mol-% und 5 Mol-%;
b) die Reaktionstemperatur liegt über 190 °C;
c) die Menge des Lösungsmittels oder Verdünnungsmittels beträgt wenigstens 20 Gew.-%.

21. Verfahren gemäß Anspruch 20, wobei die Menge des Starters zwischen 0,5 und 5 Mol-% liegt und die Menge des Typ-II-Monomers (relativ zur Gesamtmenge der Monomere des Typs (I) und des Typs (II)) wenigstens 60 Mol-% beträgt.

22. Verfahren gemäß Anspruch 20, wobei die Menge des Starters wenigstens 0,6 Mol-% beträgt und die Menge des Typ-II-Monomers (relativ zur Gesamtmenge der Monomere des Typs (I) und des Typs (II)) wenigstens 80 Mol-% beträgt.

23. Verfahren zur Herstellung eines vernetzbaren Copolymers, das das Verfahren gemäß einem der Ansprüche 1 bis 22 umfasst und weiterhin wenigstens einen Copolymerisationsschritt umfasst, wobei das in dem Verfahren gemäß Anspruch 1 bis 22 erhaltene vernetzbare Oligomer weiter mit wenigstens einem zweiten Radikalstarter und wenigstens einem zusätzlichen Monomer umgesetzt wird, wobei das bzw. die zusätzlichen Monomere aus der Gruppe ausgewählt sind, die aus den Monomeren des Typs (I), den Monomeren des Typs (II) und den Monomeren des Typs (III) besteht, die zwei oder mehr radikalisch polymerisierbare olefinisch ungesättigte Gruppen aufweisen, vorzugsweise Acrylat, Methacrylat und/oder olefinisch ungesättigte Gruppen, die substituiertes oder unsubstituiertes Aryl umfassen.

24. Verfahren gemäß Anspruch 23, wobei Monomere des Typs (III) die folgende Struktur aufweisen:
(CH₂=CH)ₙ-U-(CY'=CHW')ₘ (III),
wobei n größer oder gleich 0 ist, m größer oder gleich 0 ist, n + m größer oder gleich 2 ist, Y' and W' wie für Y bzw. W bei den Monomeren des Typs (II) definiert sind und U ein Anbindungspunkt für mehr als eine C=C-Einheit ist.

25. Verfahren gemäß Anspruch 23, wobei das Monomer des Typs (III) aus der Gruppe ausgewählt ist, die aus Divinylbenzol, Trimethylolpropantrimethacrylat, Trimethylolpropantriacrylat, Glycerin-1,3-dimethacrylat, Polyethylenglycol-200-dimethacrylat, Allylmethacrylat, 1,4-Butandioldimethacrylat, 1,4-Butandioldiacrylat, 1,3-Butandioldimethacrylat, Ethylenglycoldimethacrylat, Ethylenglycoldiacrylat, Triethylenglycoldimethacrylat, Triethylenglycoldiacrylat, 1,6-Hexandioldimethacrylat, Diurethandimethacrylat, 2,2-Bis[4-(2-hydroxy-3-methacryloyloxypropoxy)phenyl]propan, 1,12-Dodecandioldimethacrylat und Gemischen davon besteht.

26. Verfahren zur Herstellung eines vernetzbaren Copolymers gemäß Anspruch 23, wobei der Schritt der weiteren Copolymerisation bei einer Temperatur von unter 190 °C und vorzugsweise unter 170 °C für den Fall, dass das zusätzliche Monomer auch eine wesentliche Menge an Monomer Typ II umfasst, durchgeführt wird.

27. Verfahren zur Herstellung eines vernetzbaren Copolymers gemäß Anspruch 26, wobei, direkt nachdem die Herstellung des Oligomers gemäß den Ansprüchen 1 bis 22 im Wesentlichen beendet ist, die zusätzlichen Monomere den Oligomeren zugeführt werden.

28. Verfahren zur Herstellung von vernetzbaren Copolymeren des Blocktyps, umfassend das Verfahren gemäß Anspruch 23, wobei es sich bei mehr als 50 Mol-% des oder der zusätzlichen Monomere um Monomere des Typs (II) handelt.

29. Verfahren zur Herstellung von vernetzbaren Copolymeren des Blocktyps gemäß Anspruch 28, wobei sich der FEW-Wert des vernetzbaren Oligomersegments von dem der Segmente, die von den zusätzlichen Monomeren gebildet sind, wesentlich unterscheidet.

30. Verfahren zur Herstellung von vernetzbaren Copolymeren des Blocktyps gemäß Anspruch 28, wobei die mittlere OH-Zahl des oder der zusätzlichen Monomere kleiner ist als die Hälfte der mittleren OH-Zahl des vernetzbaren Oligomers.

31. Verfahren gemäß Anspruch 30, wobei die Masse des oder der zusätzlichen Monomere größer ist als die Hälfte der Masse des vernetzbaren Oligomers.

32. Verfahren zur Herstellung von vernetzbaren Copolymeren des Blocktyps gemäß Anspruch 27, wobei die mittlere OH-Zahl des oder der zusätzlichen Monomere größer ist als das Doppelte der mittleren OH-Zahl des vernetzbaren Oligomers.

33. Verfahren gemäß Anspruch 32, wobei die Masse des oder der zusätzlichen Monomere kleiner ist als die Hälfte der Masse des vernetzbaren Oligomers.

34. Verfahren zur Herstellung von vernetzbaren Copolymeren des Sterntyps, umfassend das Verfahren gemäß Anspruch 23, wobei es sich bei höchstens 20 Mol-% des oder der zusätzlichen Monomere um Monomere des Typs (III) handelt (relativ zur Gesamtmenge der Monomere im Gemisch).

35. Verfahren zur Herstellung von vernetzbaren Oligomeren, umfassend das Umsetzen wenigstens eines Monomers mit der Struktur
VHC=CHX (I)
und wenigstens eines Monomers mit der Struktur
WHC=CYZ (II)
wobei V, W, X und Z unabhängig aus der Gruppe ausgewählt sind, die aus Wasserstoff, R, COR, CO₂H CO₂R CN, CONH₂, CONHR, CONR₂, O₂CR OR oder Halogen besteht, wobei Z nicht Wasserstoff ist; R aus der Gruppe ausgewählt ist, die aus substituiertem oder unsubstituiertem Alkyl, Alkenyl, Cycloalkyl, Cycloalkenyl, Heterocyclyl, Amino, Alkylamino, Dialkylamino, Aralkyl, Silyl oder Aryl besteht; Y aus der Gruppe ausgewählt ist, die aus substituiertem und unsubstituiertem Alkyl, Alkenyl, Aryl und Aralkyl besteht; und (I) und/oder (II) cyclisch sein kann, wobei V und X aneinander gebunden sind, und/oder W und Z unter Bildung eines Rings, der wenigstens vier Atome umfasst, aneinander gebunden sind;
unter Bildung eines Reaktionsgemischs, wobei die Menge des Monomers oder der Monomere des Typs (II) in dem Reaktionsgemisch zwischen 50 Mol-% und 95 Mol-% liegt, bezogen auf die gesamte Stoffmenge der Monomere von Typ (I) und Typ (II), die miteinander umgesetzt werden, und wobei mehr als 60 Mol-% des Monomers oder der Monomere des Typs (I) eine Seitengruppe aufweisen, die wenigstens eine vernetzbare funktionelle Gruppe enthält, und wobei während der gesamten Reaktion bei dem Verfahren ein ausreichender Druck aufrechterhalten wird, um die Monomere von Typ (I) und (II) in einer im Wesentlichen flüssigen Phase zu halten, und eine Temperatur zwischen 170 °C und 260 °C aufrechterhalten wird;
und wenigstens einen zusätzlichen Schritt, bei dem das vernetzbare Oligomer weiter mit einem oder mehreren Reagentien, die wenigstens eine funktionelle Gruppe aufweisen, umgesetzt wird, wobei die funktionelle Gruppe eine oder mehrere der vernetzbaren funktionellen Gruppen des oder der Monomere des Typs (I) oder des Typs (II) modifizieren kann, wobei man ein neues vernetzbares Oligomer erhält.

36. Verfahren gemäß Anspruch 35, wobei die funktionelle Gruppe aus der Gruppe ausgewählt ist, die aus Epoxy, Silyl, Isocyanato, Amino, Anhydrid, Hydroxy, Iminoether, Imidoether, Amidoether, Carbamat, Cyano, Lacton, Lactam, Carbamat (acyclisch und cyclisch), Carbonat (acyclisch und cyclisch), Aziridin, Anhydrid, Amin, Carbonsäure und Gemischen davon besteht.

37. Vernetzbare Oligomere, erhältlich nach dem Verfahren gemäß einem der Ansprüche 1 bis 22.

38. Vernetzbare Oligomere, die das Reaktionsprodukt des Verfahrens gemäß einem der Ansprüche 1 bis 4 umfassen, wobei das Oligomer ein Zahlenmittel des Polymerisationsgrads zwischen 3 und 24, ein FEW zwischen 100 und 2000 und eine Makromerreinheit (definiert als Anteil der Oligomere mit einer ungesättigten Endgruppe in Mol-%) von wenigstens 70% aufweist.

39. Vernetzbare Oligomere gemäß Anspruch 38, wobei mehr als 80 Mol-%, am meisten bevorzugt im Wesentlichen 100 Mol-%, der Monomere des Typs (I) eine vernetzbare funktionelle Gruppe aufweisen und wobei die Makromerreinheit wenigstens 80% beträgt.

40. Vernetzbares Oligomer gemäß Anspruch 38, das ein Gewichtsmittel des Molekulargewichts zwischen 500 und 2500 aufweist.

41. Vernetzbares Oligomer gemäß Anspruch 40, wobei die Menge des Monomers des Typs (II) wenigstens 70 Mol-% beträgt.

42. Vernetzbares Oligomer gemäß Anspruch 38, das mehr als 10 Mol-% Monomere des Typs (II) mit einer vernetzbaren funktionellen Gruppe umfasst (relativ zur Gesamtmenge der Monomere des Typs I und II).

43. Vernetzbare Copolymere des Blocktyps, erhältlich nach dem Verfahren gemäß einem der Ansprüche 28 bis 33, **dadurch gekennzeichnet, dass** ein Block von zusätzlichen Monomeren zwischen den ungesättigten Endgruppen des aus Monomeren des Typs I gebildeten Oligomers und dem Rest des Oligomers in das Oligomer eingefügt wird, so dass es im Wesentlichen dieselbe terminale vernetzbare Funktion wie das Oligomer aufweist.

44. Vernetzbare Copolymere des Blocktyps, die ein Oligomer gemäß Anspruch 37 bis 42 umfassen, das um einen Block, der mehr als 50 Mol-% Monomere des Typs (II) umfasst, verlängert ist.

45. Vernetzbares Copolymer des Blocktyps, verzweigten Typs, Sterntyps oder des kammartigen Pfropftyps, das die vernetzbaren Oligomere gemäß Anspruch 37 oder 38 umfasst.

46. Beschichtung, Gleitmittel, Dichtungsmittel, Kleber, umfassend die vernetzbaren Oligomere gemäß Anspruch 37 bis 38.

47. Verwendung der vernetzbaren Oligomere gemäß Anspruch 37 bis 42 in vernetzbaren Copolymeren des Blocktyps, verzweigten Typs, Sterntyps oder des kammartigen Pfropftyps.

48. Verwendung der vernetzbaren Oligomere gemäß Anspruch 37 bis 42, der vernetzbaren Copolymere des Blocktyps, verzweigten Typs, Sterntyps oder des kammartigen Pfropftyps, die diese vernetzbaren Oligomere umfassen, in einem Verfahren zur Herstellung einer Beschichtungs-, Gleitmittel-, Dichtungsmittel- oder Kleberzusammensetzung.

## Revendications

1. Procédé de préparation d'oligomères réticulables comprenant la réaction d'au moins un monomère ayant la structure
VHC=CHX (I);
et d'au moins un monomère ayant la structure
WHC=CYZ (II)
où V, W, X et Z sont choisis indépendamment dans le groupe constitué par l'hydrogène, R, COR, CO₂H, CO₂R, CN, CONH₂, CONHR, CONR₂, O₂CR, OR ou halogène, Z n'étant pas l'hydrogène; R est choisi dans le groupe constitué par alkyle, alcényle, cycloalkyle, cycloalcényle, hétérocyclyle, amino, alkylamino, dialkylamino, aralkyle, silyle ou aryle, substitués ou non substitués; Y est choisi dans le groupe constitué par alkyle, alcényle, aryle et aralkyle, substitués et non substitués; et (I) et/ou (II) peuvent être cycliques lorsque V et X sont liés entre eux et/ou W et Z sont liés entre eux pour former un cycle qui comprend au moins 4 atomes;
pour former un mélange de réaction; dans lequel la quantité du monomère ou des monomères de type (II) dans le mélange réactionnel se situe entre 55 % en mol et 90 % en mol par rapport au nombre total de mol de monomères de type (I) et de type (II) en réaction; et dans lequel plus de 60 % en mol du monomère ou des monomères de type (I) ont un groupe latéral contenant au moins un fragment fonctionnel réticulable, et dans lequel on maintient pendant toute la réaction une pression suffisante pour maintenir les monomères de type (I) et (II) en une phase essentiellement liquide et on maintient une température entre 170°C et 260°C.

2. Procédé de préparation d'oligomères réticulables, comprenant la réaction d'au moins un monomère ayant la structure
VHC=CHX (I);
et d'au moins un monomère ayant la structure
WHC=CYZ (II)
où V et X sont choisis indépendamment dans le groupe constitué par l'hydrogène, R, COR, CO₂R, CN, CONH₂, CONHR, CONR₂, OR ou halogène, W et Z sont choisis indépendamment dans le groupe constitué par l'hydrogène, R, COR, CO₂H, CO₂R, CN, CONH₂, CONHR, CONR₂, O₂CR OR ou halogène, Z n'étant pas l'hydrogène;
R est choisi dans le groupe constitué par alkyle, alcényle, cycloalkyle, cycloalcényle, hétérocyclyle, amino, alkylamino, dialkylamino, aralkyle, silyle ou aryle, substitués ou non substitués; Y est choisi dans le groupe constitué par alkyle, alcényle, aryle et aralkyle, substitués et non substitués; et (I) et/ou (II) peuvent être cycliques lorsque V et X sont liés entre eux et/ou W et Z sont liés entre eux pour former un cycle qui comprend au moins 4 atomes;
pour former un mélange de réaction; dans lequel la quantité du monomère ou des monomères de type (II) dans le mélange réactionnel se situe entre 50 % en mol et 95 % en mol par rapport au nombre total de mol de monomères de type (I) et de type (II) en réaction; et dans lequel plus de 60 % en mol du monomère ou des monomères de type (I) ont un groupe latéral contenant au moins un fragment fonctionnel réticulable, et dans lequel on maintient pendant toute la réaction une pression suffisante pour maintenir les monomères de type (I) et (II) en une phase essentiellement liquide et on maintient une température entre 170°C et 260°C.

3. Procédé selon la revendication 1 ou la revendication 2, dans lequel R est substitué et le substituant est choisi dans le groupe constitué par hydroxy, époxy, alcoxy, acyle, acyloxy, silyle, silyloxy, silane, acide carboxylique (et ses sels), 1,3-dicarbonyle, isocyanato, acide sulfonique (et ses sels), anhydride, alcoxycarbonyle, aryloxycarbonyle, iminoéther, imidoéther, amidoéther, lactone, lactame, amide, acétal, cétal, cétone, oxazolidinone, carbamate (acyclique et cyclique), carbonate (acyclique et cyclique), halogéno, dialkylamino, oxaziridine, aziridine, oxazolidine, orthoester, urée (acyclique ou cyclique), oxétane, cyano et leurs mélanges.

4. Procédé de préparation d'oligomères réticulables comprenant la réaction d'au moins un monomère ayant la structure
VHC=CHX (I);
et d'au moins un monomère ayant la structure
WHC=CYZ (II)
où V, W, X et Z sont choisis indépendamment dans le groupe constitué par l'hydrogène, R, COR, CO₂H, CO₂R, CN, CONH₂, CONHR, CONR₂, O₂CR, OR ou halogène, Z n'étant pas l'hydrogène; R est choisi dans le groupe constitué par alkyle, alcényle, cycloalkyle, cycloalcényle, hétérocyclyle, amino, alkylamino, dialkylamino, aralkyle, silyle ou aryle, substitués ou non substitués; Y est choisi dans le groupe constitué par alkyle, alcényle, aryle et aralkyle, substitués et non substitués; et (I) et/ou (II) peuvent être cycliques lorsque V et X sont liés entre eux et/ou W et Z sont liés entre eux pour former un cycle qui comprend au moins 4 atomes;
pour former un mélange de réaction; dans lequel la quantité du monomère ou des monomères de type (II) dans le mélange réactionnel se situe entre 50 % en mol et 95 % en mol par rapport au nombre total de mol de monomères de type (I) et de type (II) en réaction; et dans lequel 60 % à 100 % en mol d'au moins un monomère de type (I) est choisi dans le groupe de monomères ayant un fragment réticulable, constitué d'acrylate d'hydroxyéthyle, d'acrylate d'hydroxypropyle, d'acrylate d'hydroxypentyle (tous les isomères), d'acrylate d'hydroxyhexyle (tous les isomères), d'acrylate d'hydroxybutyle (tous les isomères), d'isomères d'acrylate d'hydroxypropyle, de 4-hydroxystyrène, de monoacrylate de 1,4-cyclohexanediméthanol, d'acrylate d'hydroxyéthyle coiffé avec l'ε-caprolactone (monomères TONE), de produits d'addition d'acide acrylique avec des monoépoxydes, de 2-époxycylohexane, de glycidol; de produits d'addition de carbonate acrylates et d'amines, d'acrylate d'hydroxyéthyle coiffé avec du poly(oxyde d'éthylène), d'acrylate d'hydroxypropyle coiffé avec du poly(oxyde d'éthylène), d'acrylate d'hydroxyhexyle coiffé avec du poly(oxyde d'éthylène), d'isomères d'acrylate d'hydroxybutyle coiffé avec du poly(oxyde d'éthylène), d'acrylate d'hydroxyéthyle prolongé avec du poly(oxyde de propylène), d'acrylate d'hydroxypropyle prolongé avec du poly(oxyde de propylène), d'acrylate d'hydroxyhexyle prolongé avec du poly(oxyde de propylène), d'isomères d'acrylate d'hydroxybutyle prolongés avec du poly(oxyde de propylène), d'isomères d'acrylate d'hydroxybutyle prolongés avec du poly(oxyde de propylène) et leurs mélanges, d'acrylate de glycidyle, d'éther glycidylique d'acrylate de 4-hydroxybutyle, d'oxyde de vinylcyclohexène, d'éther d'allyle et de glycidyle, de N-glycidylacrylamide, de monomères acrylate avec un groupe époxy alicyclique, et de leurs mélanges, ou de vinyloxytriméthylsilane, d'acrylate de triméthoxysilylpropyle, d'acrylate de triéthoxysilylpropyle, d'acrylate de diméthoxysilylpropyle, d'acrylate de diéthoxysilylpropyle, d'acrylate de dibutoxysilylpropyle, d'acrylate de diisopropoxysilylpropyle, et de leurs mélanges, ou d'acrylate de β-carboxyéthyle, d'acide 3-vinylbenzoïque, d'acide 4-vinylbenzoïque, de benzoate de vinyle, de 4-tert-butylbenzoate de vinyle, d'esters vinyliques de l'acide versatique, de succinate d'acryloyloxyéthyle, d'acide maléique, d'acide fumarique, et d'hémi-acides/esters d'anhydride maléique, de diacétone-acrylamide, d'acétoacétate d'acryloyloxyéthyle, de 2-vinyl-1,3-dioxolane, d'éthylènecarbonate de vinyle, de N-vinylcaprolactame, d'acrylamide, de N-hydroxyméthylacrylamide, de 2-N-éthylène-urée-éthyloxyacrylate et de 2-N-éthylène-urée-éthylacrylamide et leurs mélanges, ou d'acrylate de diméthylaminoéthyle, d'acrylate de diéthylaminoéthyle, de diméthylaminoéthylacrylamide, d'acrylate de n-t-butylaminoéthyle, de monomères résultant de la réaction de t-butylamine ou de dialkylamines avec l'acrylate de glycidyle, et de leurs mélanges, ou d'anhydride d'acide acrylique, d'anhydride alcénylsuccinique, d'anhydride maléique, d'isomères d'anhydride vinylhexahydrophtalique, d'anhydride 3-méthyl-1,2,6-tétrahydrophtalique, d'anhydride 2-méthyl-1,3,6-tétrahydrophtalique, d'acide 2-(3/4-vinylbenzyl)succinique, d'acrylate d'anhydride 2-succinique, d'anhydride bicyclo[2.2.1]hept-5-ène-2-spiro-3'-exosuccinique, d'anhydrides alcénylsucciniques, et de leurs mélanges, ou de N-méthylolacrylamide méthylé, de N-méthylolacrylamide butylé, d'un dérivé vinyl-N-alcoxyméthyle de succinimide, de phtalimide, d'anhydride de N-alcoxyméthyl-1,2,3,6-tétrahydrophtalimide, de N-alcoxyméthylmaléimide, et de leurs mélanges, et 0 à 40 % en mol d'au moins un monomère de type (I) sont choisis dans le groupe de monomères de type (I) n'ayant pas de fragment fonctionnel réticulable constitué d'acrylate de méthyle, d'acrylate d'éthyle, d'acrylate de propyle, d'isomères d'acrylate de propyle, d'acrylate de butyle, d'isomères d'acrylate de butyle, d'acrylate d'hexyle, d'acrylate de 2-éthylbutyle, d'acrylate de 2-éthylhexyle, d'acrylate d'isobomyle, d'acrylate d'isoamyle, d'acrylate de benzyle, d'acrylate de phényle, d'acrylate de cyclohexyle, d'acrylate de lauryle, d'acrylate d'isodécyle, de styrène, d'acrylate de cétyle, et de leurs mélanges,
et dans lequel on maintient pendant toute la réaction une pression suffisante pour maintenir les monomères de type (I) et (II) en une phase essentiellement liquide et on maintient une température entre 170°C et 260°C.

5. Procédé selon l'une quelconque des revendications 1 à 4, dans lequel l'au moins un monomère de type (II) est choisi dans le groupe de monomères de type (II) ne contenant pas de fragment fonctionnel réticulable constitué de méthacrylate de méthyle, de méthacrylate d'éthyle, de méthacrylate de propyle, d'isomères de méthacrylate de propyle, de méthacrylate de butyle, d'isomères de méthacrylate de butyle, de méthacrylate d'hexyle, de méthacrylate de 2-éthylbutyle, de méthacrylate de crotyle, de méthacrylate de 2-éthylhexyle, de méthacrylate d'isobomyle, de méthacrylate d'isoamyle, de méthacrylate de benzyle, de méthacrylate de phényle, de méthacrylate de tétrahydrofurfuryle, de méthacrylate de 3,3,5-triméthylcyclohexyle, d'α-méthylstyrène, de méthacrylate de cyclohexyle, de méthacrylate de stéaryle, de méthacrylate de lauryle, de méthacrylate d'isodécyle, et de leurs mélanges, ou choisi dans le groupe de monomères de type (II) contenant un fragment fonctionnel réticulable constitué de méthacrylate de glycidyle, de méthacrylate de 2-hydroxyéthyle, de méthacrylate d'hydroxypropyle, d'isomères de méthacrylate d'hydroxypropyle, de méthacrylate d'hydroxybutyle, d'isomères de méthacrylate d'hydroxybutyle, de monométhacrylate de glycérol, d'acide méthacrylique, d'anhydride itaconique, d'anhydride citraconique, de méthacrylate de diméthylaminoéthyle, de méthacrylate de diéthylaminoéthyle, de diméthylaminopropylméthacrylamide, de méthacrylate de 2-tert-butylaminoéthyle, de méthacrylate de triéthylèneglycol, de méthacrylamide, de N,N-diméthylméthacrylamide, de N-tert-butylméthacrylamide, de N-méthylolméthacrylamide, de N-éthylolméthacrylamide, d'acide α-méthylvinylbenzoïque (tous les isomères), de diéthylamino-α-méthylstyrène, de méthacrylate de 2-isocyanatoéthyle, d'isomères de diéthylamino-α-méthylstyrène, de méthacrylate de triméthoxysilylpropyle, de méthacrylate de triéthoxysilylpropyle, d'acide méthacrylique, de méthacrylate de tributoxysilylpropyle, de méthacrylate de diméthoxyméthylsilylpropyle, de méthacrylate de diisopropoxyméthylsilylpropyle, de méthacrylate de diméthoxysilylpropyle, de méthacrylate de diéthoxysilylpropyle, de méthacrylate de dibutoxysilylpropyle, de méthacrylate de diisopropoxysilylpropyle, d'isobutylène, et de leurs mélanges.

6. Procédé selon l'une quelconque des revendications 1 à 4, dans lequel Z et X sont des groupes acide carboxylique, ester d'acide carboxylique, ou aryle substitué ou non substitué.

7. Procédé selon l'une quelconque des revendications 1 à 4, comprenant en outre l'addition d'au moins un amorceur de radicaux libres aux monomères de type (I) et (II), en une quantité entre 0,1 % en mol et 5 % en mol par rapport au nombre total de mol de monomères en réaction.

8. Procédé selon l'une quelconque des revendications 1 à 4, comprenant en outre l'addition d'au moins un solvant ou diluant aux monomères de type (I) et (II).

9. Procédé selon la revendication 8, dans lequel le solvant est un solvant de type ester choisi dans le groupe constitué par l'acétate de méthyle, l'acétate d'éthyle, l'acétate de n-butyle, le propionate de n-butyle, l'acétate d'isobutyle, le propionate de n-pentyle, l'acétate de n-propyle, l'acétate d'isopropyle, l'acétate d'amyle et l'isobutyrate d'isobutyle.

10. Procédé selon la revendication 8, dans lequel le solvant ou le diluant est un polyester oligomère ayant un indice d'OH d'au moins 100 mg de KOH/g, et une masse moléculaire moyenne en nombre inférieure à 2000.

11. Procédé selon la revendication 8, dans lequel le solvant ou le diluant sont réactifs dans les conditions de la polymérisation indépendamment des réactions radicalaires ou sont inertes ou essentiellement inertes dans les conditions de la polymérisation, mais sont réactifs dans les conditions de post-polymérisation, comprenant des réactions de réticulation pour un revêtement.

12. Procédé selon l'une quelconque des revendications 1 à 4, comprenant l'addition d'au moins un amorceur de radicaux libres à l'achèvement substantiel de la réaction à une température inférieure à 170°C pour faire réagir le monomère résiduel.

13. Procédé selon l'une quelconque des revendications 1 à 4, comprenant l'élimination du monomère résiduel n'ayant pas réagi directement après l'achèvement substantiel de la réaction sans addition d'au moins un amorceur de radicaux libres à une température inférieure à 170°C.

14. Procédé selon l'une quelconque des revendications 1 à 4, dans lequel le mélange de monomères comprend au moins 10 % en mol de monomères ayant un fragment fonctionnel réticulable (par rapport à la quantité totale de monomères de type (I) et de type (II)).

15. Procédé selon la revendication 14, dans lequel le mélange de monomères comprend au moins 10 % en mol (par rapport à la quantité totale de monomères de type (I) et de type (II)) de monomères de type (I) ayant un fragment fonctionnel réticulable et en tout au moins 20 % en mol de monomères ayant un fragment fonctionnel réticulable.

16. Procédé selon l'une quelconque des revendications 1 à 4, dans lequel plus de 80 % en mol, préférentiellement pratiquement 100 % en mol des monomères de type (I) ont un fragment fonctionnel réticulable.

17. Procédé selon l'une quelconque des revendications 1 à 4, dans lequel les monomères de type (II) comprennent plus de 5 % en mol de monomères ayant un fragment fonctionnel réticulable.

18. Procédé selon l'une quelconque des revendications 1 à 4, dans lequel la pureté de macromère (définie comme la fraction en % en mol d'oligomères ayant un groupe terminal insaturé) est d'au moins 70 % en mol.

19. Procédé selon la revendication 1, dans lequel l'oligomère a une masse moléculaire moyenne en poids entre 500 et 2500.

20. Procédé selon la revendication 19, dans lequel la quantité de monomère de type (II) (par rapport à la quantité totale de monomères de type (I) et de type (II)) est d'au moins 60 % en mol, et comprenant en outre au moins l'une des caractéristiques suivantes:
a) la quantité d'amorceur se situe entre 0,5 % en mol et 5 % en mol;
b) la température de la réaction est supérieure à 190°C;
c) la quantité de solvant ou de diluant est d'au moins 20 % en masse.

21. Procédé selon la revendication 20, dans lequel la quantité d'amorceur se situe entre 0,5 et 5 % en mol et la quantité de monomère (II) (par rapport à la quantité totale de monomères de type (I) et de type (II)) est d'au moins 60 % en mol.

22. Procédé selon la revendication 20, dans lequel la quantité d'amorceur est d'au moins 0,6 % en mol et la quantité de monomère (II) (par rapport à la quantité totale de monomères de type (I) et de type (II)) est d'au moins 80 % en mol.

23. Procédé de préparation d'un copolymère réticulable, comprenant le procédé selon l'une quelconque des revendications 1 à 22 et comprenant en outre au moins une étape de copolymérisation dans laquelle on fait encore réagir l'oligomère réticulable obtenu dans le procédé selon l'une quelconque des revendications 1 à 22 avec au moins un deuxième amorceur de radicaux libres et au moins un monomère additionnel, le monomère ou les monomères additionnels étant choisis dans le groupe constitué par les monomères de type (I), les monomères de type (II) et des monomères de type (III) ayant au moins deux groupes à insaturation oléfinique polymérisables par voie radicalaire, de préférence des groupes acrylate, méthacrylate et/ou des groupes à insaturation oléfinique comprenant un aryle substitué ou non substitué.

24. Procédé selon la revendication 23, dans lequel les monomères de type (III) ont la structure suivante:
(CH₂=CH)ₙ-U-(CY'=CHW')ₘ (III)
dans laquelle n est supérieur ou égal à 0; m est supérieur ou égal à 0; n+m est supérieur ou égal à 2; Y' et W' ont respectivement la même définition que Y et W dans les monomères de type (II); et U est un point de liaison pour plus d'une unité C=C.

25. Procédé selon la revendication 23, dans lequel le monomère de type (III) est choisi dans le groupe constitué par le divinylbenzène, le triméthacrylate de triméthylolpropane, le triacrylate de triméthylolpropane, le 1,3-diméthacrylate de glycérol, le diméthacrylate de polyéthylèneglycol 200, le méthacrylate d'allyle, le diméthacrylate de 1,4-butanediol, le diacrylate de 1,4-butanediol, le diméthacrylate de 1,3-butanediol, le diméthacrylate d'éthylèneglycol, le diacrylate d'éthylèneglycol, le diméthacrylate de triéthylèneglycol, le diacrylate de triéthylèneglycol, le diméthacrylate de 1,6-hexanediol, le diméthacrylate de diuréthane, le 2,2-bis[4-(2-hydroxy-3-méthacryloyloxypropoxy)phényl]propane, le diméthacrylate de 1,12-dodécanediol, et leurs mélanges.

26. Procédé de préparation d'un copolymère réticulable selon la revendication 23, dans lequel l'étape de copolymérisation supplémentaire s'effectue à une température inférieure à 190°C et de préférence inférieure à 170°C dans le cas où le monomère additionnel comprend aussi une quantité importante de monomère de type II.

27. Procédé de préparation d'un copolymère réticulable selon la revendication 26, dans lequel, directement après l'achèvement substantiel de la préparation de l'oligomère selon les revendications 1-22, on ajoute les monomères additionnels aux oligomères.

28. Procédé de préparation de copolymères réticulables de type à blocs, comprenant le procédé selon la revendication 23 dans lequel plus de 50 % en mol du ou des monomères additionnels sont des monomères de type (II).

29. Procédé de préparation de copolymères réticulables de type à blocs selon la revendication 28, dans lequel l'indice FEW du segment oligomère réticulable est essentiellement différent du ou des segments formés par le ou les monomères additionnels.

30. Procédé de préparation de copolymères réticulables de type à blocs selon la revendication 28, dans lequel l'indice d'OH moyen du ou des monomères additionnels est inférieur à la moitié de l'indice d'OH moyen de l'oligomère réticulable.

31. Procédé selon la revendication 30, dans lequel la masse du ou des monomères additionnels est supérieure à la moitié de la masse de l'oligomère réticulable.

32. Procédé de préparation de copolymères réticulables de type à blocs selon la revendication 27, dans lequel l'indice d'OH moyen du ou des monomères additionnels est supérieur au double de l'indice d'OH moyen de l'oligomère réticulable.

33. Procédé selon la revendication 32, dans lequel la masse du ou des monomères additionnels est inférieure à la moitié de la masse de l'oligomère réticulable.

34. Procédé de préparation de copolymères réticulables de type étoile, comprenant le procédé selon la revendication 23 dans lequel au plus de 20 % en mol du ou des monomères additionnels sont des monomères de type (III) (par rapport à la quantité totale de monomères dans le mélange).

35. Procédé de préparation d'oligomères réticulables, comprenant la réaction d'au moins un monomère ayant la structure
VHC=CHX (I);
et d'au moins un monomère ayant la structure
WHC=CYZ (II)
où V, W, X et Z sont choisis indépendamment dans le groupe constitué par l'hydrogène, R, COR, CO₂H, CO₂R, CN, CONH₂, CONHR, CONR₂, O₂CR, OR ou halogène, Z n'étant pas l'hydrogène;
R est choisi dans le groupe constitué par alkyle, alcényle, cycloalkyle, cycloalcényle, hétérocyclyle, amino, alkylamino, dialkylamino, aralkyle, silyle ou aryle, substitués ou non substitués; Y est choisi dans le groupe constitué par alkyle, alcényle, aryle et aralkyle, substitués et non substitués; et (I) et/ou (II) peuvent être cycliques lorsque V et X sont liés entre eux et/ou W et Z sont liés entre eux pour former un cycle qui comprend au moins 4 atomes;
pour former un mélange de réaction; dans lequel la quantité du monomère ou des monomères de type (II) dans le mélange réactionnel se situe entre 50 % en mol et 95 % en mol par rapport au nombre total de mol de monomères de type (I) et de type (II) en réaction; et dans lequel plus de 60 % en mol du monomère ou des monomères de type (I) ont un groupe latéral contenant au moins un fragment fonctionnel réticulable, et dans lequel on maintient pendant toute la réaction une pression suffisante pour maintenir les monomères de type (I) et (II) en une phase essentiellement liquide et on maintient une température entre 170°C et 260°C,
et au moins une étape supplémentaire dans laquelle on fait encore réagir l'oligomère réticulable avec un ou plusieurs réactifs ayant au moins un groupe fonctionnel, ledit groupe fonctionnel étant capable de modifier un ou plusieurs des fragments fonctionnels réticulables du monomère ou des monomères de type (I) ou de type (II) pour obtenir un nouvel oligomère réticulable.

36. Procédé selon la revendication 35 dans lequel le groupe fonctionnel est choisi dans le groupe constitué par époxy, silyle, isocyanato, amino, anhydride, hydroxy, iminoéther, imidoéther, amidoéther, carbamate, cyano, lactone, lactame, carbamate (acyclique et cyclique), carbonate (acyclique et cyclique), aziridine, anhydride, amine, acide carboxylique, et leurs mélanges.

37. Oligomères réticulables pouvant être obtenus par le procédé selon l'une quelconque des revendications 1 à 22.

38. Oligomères réticulables comprenant le produit de réaction du procédé selon l'une quelconque des revendications 1 à 4, l'oligomère ayant un degré de polymérisation moyen en nombre entre 3 et 24, un indice FEW entre 100 et 2 000 et une pureté de macromère (définie comme la fraction en % en mol d'oligomères ayant un groupe terminal insaturé) d'au moins 70 %.

39. Oligomères réticulables selon la revendication 38, dans lesquels plus de 80 % en mol, au mieux pratiquement 100 % en mol des monomères de type (I) ont un fragment fonctionnel réticulable et dans lesquels la pureté de macromère est d'au moins 80 %.

40. Oligomère réticulable selon la revendication 38, ayant une masse moléculaire moyenne en poids entre 500 et 2 500.

41. Oligomère réticulable selon la revendication 40, dans lequel la quantité de monomère de type II est d'au moins 70 % en mol.

42. Oligomère réticulable selon la revendication 38, comprenant plus de 10 % en mol de monomères de type (II) ayant un fragment fonctionnel réticulable (par rapport à la quantité totale de monomères de type I et II).

43. Copolymères de type à blocs réticulables pouvant être obtenus par le procédé selon l'une quelconque des revendications 28 à 33, **caractérisés en ce qu'**un bloc de monomères additionnels est inséré dans l'oligomère entre les groupes terminaux insaturés de l'oligomère formé par un ou des monomères de type (I) et le reste de l'oligomère, ce qui fait qu'ils ont essentiellement la même fonctionnalité réticulable terminale que l'oligomère.

44. Copolymères de type à blocs réticulables comprenant un oligomère selon les revendications 37 à 42, qui est prolongé par un bloc comprenant plus de 50 % en mol de monomères de type (II).

45. Copolymère réticulable à blocs, ramifié, greffé en étoile ou en peigne, comprenant les oligomères réticulables de la revendication 37 ou 38.

46. Revêtement, lubrifiant, matériau d'étanchéité, adhésif, comprenant les oligomères réticulables de la revendication 37 ou 38.

47. Utilisation des oligomères réticulables selon les revendications 37 à 42 dans des copolymères réticulables à blocs, ramifiés, greffés en étoile ou en peigne.

48. Utilisation des oligomères réticulables selon les revendications 37 à 42, des copolymères réticulables à blocs, ramifiés, greffés en étoile ou en peigne comprenant lesdits oligomères réticulables, dans un procédé de fabrication d'une composition de revêtement, de lubrifiant, de matériau d'étanchéité ou d'adhésif.
